(19) Europäisches Patentamt
European Patent Office
Office européen des brevets

(11) EP 3 163 335 A1

(12) **EUROPEAN PATENT APPLICATION**
published in accordance with Art. 153(4) EPC

(43) Date of publication:
**03.05.2017 Bulletin 2017/18**

(21) Application number: **15814788.4**

(22) Date of filing: **30.06.2015**

(51) Int Cl.:
***G02B 5/30*** *(2006.01)* ***B32B 15/08*** *(2006.01)*
***B41M 3/14*** *(2006.01)* ***B42D 25/364*** *(2014.01)*

(86) International application number:
**PCT/JP2015/068801**

(87) International publication number:
**WO 2016/002765 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 JP 2014134761**

(71) Applicant: **Zeon Corporation**
**Tokyo 100-8246 (JP)**

(72) Inventor: **OOISHI, Hitoshi**
**Tokyo 100-8246 (JP)**

(74) Representative: **Vossius & Partner Patentanwälte Rechtsanwälte mbB**
**Siebertstrasse 3**
**81675 München (DE)**

(54) **IDENTIFICATION MEDIUM, METHOD FOR PRODUCING IDENTIFICATION MEDIUM, AND METHOD FOR USING IDENTIFICATION MEDIUM**

(57) An identification medium including a metal foil and a cholesteric resin layer fragmentally disposed on the metal foil. In the identification medium, chromaticity coordinates (x1, y1) in an xy chromaticity diagram of the metal foil and chromaticity coordinates (x2, y2) in an xy chromaticity diagram of the cholesteric resin layer satisfy:

$$0 \leq |x1 - x2| \leq 0.02$$

and

$$0 \leq |y1 - y2| \leq 0.02.$$

FIG.1

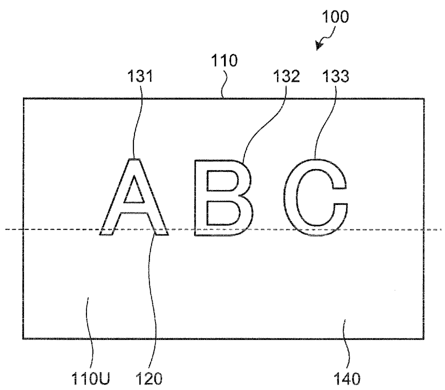


EP 3 163 335 A1

## Description

Field

The present invention relates to an identification medium, a method for producing the identification medium, and a method of using the identification medium. Specifically, the present invention relates to an identification medium for authenticity identification for determining the authenticity of an article provided with the identification medium.

Background

To prevent forgery of articles, an article required to be authentic is usually provided on its surface with an identification medium that cannot be replicated easily. Such an identification medium needs to have properties such as difficulty in replication and an ability of enabling facile authenticity determination. A known example of such an identification medium is an identification medium using polarized light. For example, Patent Literature 1 discloses an identification medium having a pattern drawn with a cholesteric liquid crystal material that is detected with use of the polarized light. A technique as described in Patent Literature 2 is also known.

Citation List

Patent Literature

Patent Literature 1: International Application Japanese Translation of PCT Patent Application Publication No. 2011-524556 A (foreign counterpart publication:

European Patent Application Publication No. 2285587)

Patent Literature 2: Japanese Patent No. 5123445 B (foreign counterpart publication: European Patent Application Publication No. 1129373)

Summary

Technical Problem

However, when a pattern drawn with a cholesteric liquid crystal material as described in Patent Literature 1 is formed on the surface of an article, a particular color and a change in color depending on the viewing angle characteristic to the cholesteric liquid crystal material are observed. When such a color and a change are observed and the vicinity of the pattern is a metal surface, a difference in color between the metal surface and the pattern allows the shape of the pattern to be recognized by visual observation even without using a circularly polarizing plate. To prevent forgery, there is a need to avoid easy recognition of the shape of the pattern by visual observation without using a circularly polarizing plate.

The present invention has been created in light of the above-mentioned problem, and an object of the present invention is to provide an identification medium for authenticity identification in which a pattern cannot be easily recognized by visual observation without using a circularly polarizing plate.

Solution to Problem

The inventor of the present invention has diligently carried out studies to solve the above-mentioned problem and, as a result, has found that a pattern can be made not to be easily recognized by visual observation without using a circularly polarizing plate when the chromaticity coordinates of the metal foil and the chromaticity coordinates of the cholesteric resin layer satisfy a predetermined relationship in an identification medium including a metal foil and a cholesteric resin layer fragmentally disposed on the metal foil, thereby completing the present invention.

That is, the present invention is as described below.

(1) An identification medium comprising a metal foil and a cholesteric resin layer fragmentally disposed on the metal foil,
wherein chromaticity coordinates (x1, y1) in an xy chromaticity diagram of the metal foil and chromaticity coordinates

(x2, y2) in an xy chromaticity diagram of the cholesteric resin layer satisfy:

$$0 \le |x1 - x2| \le 0.02$$

and

$$0 \le |y1 - y2| \le 0.02.$$

(2) The identification medium according to (1), wherein a distance between a surface of the metal foil on a side of the cholesteric resin layer and a surface of the cholesteric resin layer on a side opposite to the metal foil is 3 μm or larger and 10 μm or smaller.

(3) The identification medium according to (1) or (2), further comprising an isotropic layer,
wherein the cholesteric resin layer and the isotropic layer exist in a mixed manner in a single layer.

(4) The identification medium according to any one of (1) to (3),
wherein a reflectance Ya550 of the metal foil at a wavelength of 550 nm and a reflectance Yb550 of the cholesteric resin layer at a wavelength of 550 nm satisfy:

$$0\% \le |Ya550 - Yb550| \le 10\%.$$

(5) The identification medium according to any one of (1) to (4), further comprising a thermoplastic resin layer between the metal foil and the cholesteric resin layer.

(6) A method for producing the identification medium according to (5), comprising:

a step of disposing the thermoplastic resin layer on the metal foil;
a step of bringing the thermoplastic resin layer into contact with the cholesteric resin layer; and
a step of welding the thermoplastic resin layer and the cholesteric resin layer together.

(7) A method of using the identification medium according to any one of (1) to (5), comprising:

viewing a surface of the identification medium on a side of the cholesteric resin layer through a circularly polarizing plate, whereby a region with the cholesteric resin layer is observed as bright state, and a region without the cholesteric resin layer is observed as dark state.

Advantageous Effects of Invention

The present invention can provide an identification medium for authenticity identification having a pattern that cannot be easily recognized by visual observation without using a circularly polarizing plate.

Brief Description of Drawings

FIG. 1 is a plan view schematically illustrating an identification medium according to a first embodiment of the present invention.

FIG. 2 is a vertical cross-sectional view schematically illustrating a cross section of the identification medium illustrated in FIG. 1 taken along the broken line in FIG. 1.

FIG. 3 is a partial vertical cross-sectional view schematically illustrating a cholesteric resin layer and a thermoplastic resin layer in the identification medium according to the first embodiment of the present invention, and the paths of light passing through these layers or reflected by these layers.

FIG. 4 is a partial vertical cross-sectional view schematically illustrating the cholesteric resin layer and the thermoplastic resin layer in the identification medium according to the first embodiment of the present invention, and the paths of light passing through these layers or reflected by these layers.

FIG. 5 is a vertical cross-sectional view schematically illustrating a layered support for describing an example of a method for producing the identification medium according to the first embodiment of the present invention.

FIG. 6 is a vertical cross-sectional view schematically illustrating a CLC multilayer film for describing an example of the method for producing the identification medium according to the first embodiment of the present invention.

FIG. 7 is a vertical cross-sectional view schematically illustrating a layered intermediate for describing an example of the method for producing the identification medium according to the first embodiment of the present invention.

FIG. 8 is a vertical cross-sectional view schematically illustrating the identification medium and the CLC multilayer film for describing an example of the method for producing the identification medium according to the first embodiment of the present invention.

FIG. 9 is a plan view schematically illustrating an identification medium according to a second embodiment of the present invention.

FIG. 10 is a vertical cross-sectional view schematically illustrating the cross section of the identification medium illustrated in FIG. 9 taken along the broken line in FIG. 9.

FIG. 11 is a vertical cross-sectional view schematically illustrating a CLC multilayer film for describing an example of a method for producing the identification medium according to the second embodiment of the present invention.

FIG. 12 is a vertical cross-sectional view schematically illustrating a layered intermediate for describing an example of the method for producing the identification medium according to the second embodiment of the present invention.

FIG. 13 is a vertical cross-sectional view schematically illustrating the identification medium and a substrate film for describing an example of the method for producing the identification medium according to the second embodiment of the present invention.

Description of Embodiments

Although the present invention will be described below in detail by way of embodiments and examples, the present invention is not limited to the embodiments, the examples, and the like described below and may be arbitrarily modified and practiced without departing from the scope of the claims of the present invention and equivalents thereto.

In the following description of an identification medium, unless otherwise specified, the identification medium is assumed to be horizontally placed with the surface to be observed facing upward. Therefore, the side relatively close to the observer when observed (the side facing the observer in the plan view, the upper side in the vertical cross-sectional view) may be referred to simply as the upper side, and the side relatively away from the observer may be referred to simply as the lower side.

In the following description, unless otherwise specified, a "polarizing plate" and a "quarter-wave plate" include not only a rigid member but also a flexible member, such as a film made of resin.

In the following description, unless otherwise specified, the in-plane retardation of a layer is a value represented by (nx - ny) x d unless otherwise specified. In the formula, nx represents a refractive index in a direction that is perpendicular to the thickness direction of the layer (an in-plane direction) and that provides the maximum refractive index. In the formula, ny represents a refractive index in the direction that is an in-plane direction of the layer and is perpendicular to the direction corresponding nx. In addition, d represents the thickness of the layer. The in-plane retardation may be determined by using a commercially available phase-difference measuring device (for example, "WPA-micro" available from Photonic Lattice, Inc.) or the senarmont method, AxoScan available from Axometrics, Inc. or KOBRA available from Oji Scientific Instruments.

In the following description, unless otherwise specified, "(meth)acrylate" encompasses both "acrylate" and "methacrylate". In addition, "(meth)acrylic" encompasses both "acrylic" and "methacrylic".

[First Embodiment]

FIG. 1 is a plan view schematically illustrating an identification medium according to a first embodiment of the present invention. FIG. 2 is a vertical cross-sectional view schematically illustrating the cross section of the identification medium illustrated in FIG. 1 taken along the broken line in FIG. 1. In FIG. 2 and the other cross-sectional views, the ratio of the size in the thickness direction with respect to the size in the width direction is shown to be larger than the size of an actual identification medium for the sake of convenience in illustration.

As illustrated in FIG. 1, an identification medium 100 according to the first embodiment of the present invention includes a metal foil 110 and a cholesteric resin layer 120 fragmentally disposed on the metal foil 110. The "fragmentally" as used herein means that the percentage of the area occupied by the cholesteric resin layer 120 with respect to the area of a surface 110U of the metal foil 110 on which the cholesteric resin layer 120 is provided is 1% or more and less than 50%. Usually, the cholesteric resin layer 120 is provided in a plurality of regions so as to form a plurality of patterns 131 to 133. In this embodiment, the cholesteric resin layer 120 is provided only in the regions of the surface 110U of the metal foil 110 corresponding to the patterns 131 to 133, so that the marks having the shapes corresponding to the patterns 131 to 133 are formed.

As illustrated in FIG. 2, a thermoplastic resin layer 140 is disposed between the metal foil 110 and the cholesteric

resin layer 120. In the identification medium 100, the cholesteric resin layer 120 is bonded to the surface 110U of the metal foil 110 via the thermoplastic resin layer 140. Although a description is made in this embodiment by illustrating an example in which the thermoplastic resin layer 140 is disposed on the entire surface 110U of the metal foil 110, the thermoplastic resin layer 140 may be formed only directly under the cholesteric resin layer 120. The thermoplastic resin layer 140 is not a component essential to the present invention but an optional component.

The cholesteric resin layer 120 has a property of transmitting one circularly polarized light selected from right-handed circularly polarized light and left-handed circularly polarized light and reflecting part or all of the other circularly polarized light. The identification medium 100 can exhibit an authenticity identification function by using this property.

The authenticity identification function of the identification medium 100 according to this embodiment will be described with reference to FIG. 3 and FIG. 4. Although various types of absorption and reflection may occur in addition to those described below in the actual identification medium 100, the main paths of light are schematically described in the following description for convenience of description of the function. The reflection of light by the cholesteric resin layer 120 may occur not only on the surface of the cholesteric resin layer 120 but also in the cholesteric resin layer 120. As the schematic expression, the reflection of light by the cholesteric resin layer 120 is assumed to occur on the surface of the cholesteric resin layer 120 in FIG. 3 and FIG. 4.

FIG. 3 and FIG. 4 are partial vertical cross-sectional views schematically illustrating the cholesteric resin layer 120 and the thermoplastic resin layer 140 in the identification medium 100 according to the first embodiment of the present invention, and the paths of light passing through these layers or reflected by these layers. FIG. 3 and FIG. 4 illustrate examples in which a layer that reflects right-handed circularly polarized light and transmits left-handed circularly polarized light is provided as the cholesteric resin layer 120.

FIG. 3 illustrates a case where the identification medium 100 is observed through a right-handed circularly polarizing plate 150 that can transmit right-handed circularly polarized light and absorb left-handed circularly polarized light. When natural light $A_L$ enters the right-handed circularly polarizing plate 150, left-handed circularly polarized light is absorbed by the right-handed circularly polarizing plate 150, and right-handed circularly polarized light $A_{L1R}$ passes through the right-handed circularly polarizing plate 150.

In a region of the identification medium 100 where the cholesteric resin layer 120 is provided, right-handed circularly polarized light $A_{L1R}$ is reflected by the cholesteric resin layer 120. In the reflection by the cholesteric resin layer 120, the rotation direction of the electric field vector of the circularly polarized light is maintained. Consequently, the reflected right-handed circularly polarized light $A_{L2R}$ passes through the right-handed circularly polarizing plate 150 and is recognized by the observer.

In a region of the identification medium 100 where the cholesteric resin layer 120 is not provided, right-handed circularly polarized light $A_{L1R}$ passes through the thermoplastic resin layer 140 and is reflected on the surface 110U of the metal foil 110. Since the rotation direction of the electric field vector of the circularly polarized light is reversed by the reflection on the surface 110U of the metal foil 110, the reflected light is converted to be left-handed circularly polarized light $A_{L2L}$. After passing through the thermoplastic resin layer 140, the left-handed circularly polarized light $A_{L2L}$ is absorbed by the right-handed circularly polarizing plate 150 and is not recognized by the observer.

Next, FIG. 4 illustrates a case where the identification medium 100 is observed through a left-handed circularly polarizing plate 160 that can transmit left-handed circularly polarized light and absorb right-handed circularly polarized light. When natural light $A_L$ enters the left-handed circularly polarizing plate 160, right-handed circularly polarized light is absorbed by the left-handed circularly polarizing plate 160, and left-handed circularly polarized light $A_{L1L}$ passes through the left-handed circularly polarizing plate 160.

In a region of the identification medium 100 where the cholesteric resin layer 120 is provided, left-handed circularly polarized light $A_{L1L}$ passes through the cholesteric resin layer 120 and the thermoplastic resin layer 140, reaches the underlying surface 110U of the metal foil 110, and is reflected on the surface 110U of the metal foil 110. Since the rotation direction of the electric field vector of the circularly polarized light is reversed by the reflection on the surface 110U of the metal foil 110, the reflected light is converted to be right-handed circularly polarized light $A_{L2R}$. The right-handed circularly polarized light $A_{L2R}$ passes through the thermoplastic resin layer 140 and is reflected by the cholesteric resin layer 120. The reflected right-handed circularly polarized light $A_{L3R}$ passes through the thermoplastic resin layer 140, and is reflected again on the surface 110U of the metal foil 110, to thereby be converted to be left-handed circularly polarized light $A_{L3L}$. The left-handed circularly polarized light $A_{L3L}$ then passes through the thermoplastic resin layer 140, the cholesteric resin layer 120, and the left-handed circularly polarizing plate 160 and is recognized by the observer.

In a region of the identification medium 100 without the cholesteric resin layer 120, left-handed circularly polarized light $A_{L1L}$ passes through the thermoplastic resin layer 140 and is reflected on the surface 110U of the metal foil 110. Since the rotation direction of the electric field vector of the circularly polarized light is reversed by the reflection on the surface 110U of the metal foil 110, the reflected light is converted to be right-handed circularly polarized light $A_{L2R}$. After passing through the thermoplastic resin layer 140, the right-handed circularly polarized light $A_{L2R}$ is absorbed by the left-handed circularly polarizing plate 160 and is not recognized by the observer.

As a method of using the identification medium 100, the surface 100U of the identification medium 100 on the cholesteric resin layer 120 side is viewed through the right-handed circularly polarizing plate 150 or the left-handed circularly polarizing plate 160. In this case, as mentioned above, the reflected light in a region with the cholesteric resin layer 120 is recognized, and the reflected light in a region without the cholesteric resin layer 120 is not recognized. The region with the cholesteric resin layer 120 is thus observed as bright state, and the region without the cholesteric resin layer 120 is observed as dark state. Consequently, the patterns 131 to 133 (see FIG. 1) formed of the cholesteric resin layer 120 can be recognized by the observer. Therefore, when an observer observing the identification medium 100 through the right-handed circularly polarizing plate 150 or the left-handed circularly polarizing plate 160 can recognize the patterns 131 to 133 formed of the cholesteric resin layer 120, an article provided with the identification medium 100 is determined to be authentic. When an observer observing the identification medium 100 through the right-handed circularly polarizing plate 150 or the left-handed circularly polarizing plate 160 cannot recognize the patterns 131 to 133 formed of the cholesteric resin layer 120, an article provided with the identification medium 100 is determined to be unauthentic.

In the identification medium 100 according to this embodiment, the chromaticity coordinates (x1, y1) in the xy chromaticity diagram of the metal foil 110 and the chromaticity coordinates (x2, y2) in the xy chromaticity diagram of the cholesteric resin layer 120 satisfy:

$$0 \leq |x1 - x2| \leq 0.02$$

and

$$0 \leq |y1 - y2| \leq 0.02.$$

More specifically, the value of "|x1 - x2|" is usually 0 or higher, and usually 0.02 or lower, more preferably 0.01 or lower, and more preferably 0.005 or lower. The value of "|y1 - y2|" is usually 0 or higher, and usually 0.02 or lower, more preferably 0.01 or lower, and more preferably 0.005 or lower. By satisfying such requirements, a region with the cholesteric resin layer 120 and a region without the cholesteric resin layer 120 are observed as regions having similar colors when the surface 100U of the identification medium 100 on the cholesteric resin layer 120 side is viewed without a circularly polarizing plate. Thus, the observer cannot easily recognize the patterns 131 to 133 formed of the cholesteric resin layer 120. Therefore, a forgery difficulty can be increased.

The chromaticity coordinates of the metal foil 110 and the cholesteric resin layer 120 may be determined in accordance with JIS Z8722 using a spectrophotometer ("V-7200" available from JASCO Corporation) by causing light to enter the surface of the object to be measured in a direction at an angle of 5° with respect to the normal direction of the surface of the object to be measured and measuring the chromaticity coordinates in a direction that is inclined at an angle of 5° with respect to the normal direction and is symmetric to the direction of the incident light about the normal direction. In this case, s-polarized light and p-polarized light are used as incident light, and the average value of numerical values determined with these types of light are employed as the chromaticity coordinates of the measured object. Illuminant C may be used as a light source.

In the identification medium 100 according to this embodiment, a reflectance Ya550 of the metal foil 110 at a wavelength of 550 nm and a reflectance Yb550 of the cholesteric resin layer 120 at a wavelength of 550 nm preferably satisfy $0\% \leq |Ya550 - Yb550| \leq 10\%$. More specifically, the value of "|Ya550 - Yb550|" is usually 0% or higher and usually 10% or lower, preferably 7.0% or lower, and more preferably 5.0% or lower. By satisfying such a requirement, a region with the cholesteric resin layer 120 and a region without the cholesteric resin layer 120 are observed as regions having similar brightness when the surface 100U of the identification medium 100 on the cholesteric resin layer 120 side is viewed without using a circularly polarizing plate. Thus, the observer cannot easily recognize the patterns 131 to 133 formed of the cholesteric resin layer 120. Therefore, a forgery difficulty can be further increased.

The reflectance of the metal foil 110 and the cholesteric resin layer 120 at a wavelength 550 nm may be determined in accordance with JIS Z8722 using a spectrophotometer ("V-7200" available from JASCO Corporation) by causing light to enter the surface of the object to be measured in a direction at an angle of 5° with respect to the normal direction of the surface of the object to be measured and measuring the reflectance in a direction that is inclined at an angle of 5° with respect to the normal direction and is symmetric to the direction of the incident light about the normal direction. In this case, s-polarized light and p-polarized light are used as incident light, and the average value of numerical values determined with these types of light are employed as the reflectance of the measured object. Illuminant C may be used as a light source.

The cholesteric resin layer 120 that satisfies the requirements regarding the chromaticity coordinates and the reflectance as described above may be, for example, a cholesteric resin layer (i) having a helical structure in which the length of the pitch is changed stepwisely, or a cholesteric resin layer (ii) having a helical structure in which the length of the pitch is changed continuously. The details of these layers will be described below. However, the cholesteric resin layer 120 is not limited to these cholesteric resin layers (i) and (ii).

As illustrated in FIG. 2, a distance T between the surface 110U of the metal foil 110 on a side of the cholesteric resin layer 120 and the surface 120U of the cholesteric resin layer 120 on a side opposite to the metal foil 110 is preferably 3 μm or more, more preferably 4 μm or more, and particularly preferably 5 μm or more, and is preferably 10 μm or less, more preferably 8 μm or less, and particularly preferably 6 μm or less. When the distance T is equal to or more than the lower limit of the aforementioned range, the cholesteric resin layer 120 can be thick, and thus the chromaticity coordinates and the reflectance of the cholesteric resin layer 120 can be controlled to be similar to those of the metal foil 110. When the distance T is equal to or less than the upper limit, a difference in level between the metal foil 110, and the cholesteric resin layer 120 and the thermoplastic resin layer 140 is less noticeable in a case where the surface 100U of the identification medium 100 on the side of the cholesteric resin layer 120 is viewed without using a circularly polarizing plate. This can make it difficult to recognize the patterns 131 to 133 formed of the cholesteric resin layer 120.

A method for producing the identification medium 100 is not limited and may be, for example, a production method including a step of disposing the thermoplastic resin layer 140 on the metal foil 110; a step of bringing the thermoplastic resin layer 140 into contact with the cholesteric resin layer 120; and a step of welding the thermoplastic resin layer 140 and the cholesteric resin layer 120 together. The "welding" as used herein means that the thermoplastic resin layer 140 is thermally melted and, if necessary, cooled while applying pressure, to thereby bond the cholesteric resin layer 120 to the surface 110U of the metal foil 110. The welding may also be referred to as "fusing", "heat sealing", or "heat bonding". This production method will be described below by way of an example.

FIG. 5 is a vertical cross-sectional view schematically illustrating a layered support 210 for describing an example of the method for producing the identification medium 100 according to the first embodiment of the present invention.

In the production method according to this example, as illustrated in FIG. 5, a step of disposing the thermoplastic resin layer 140 on the surface 110U of the metal foil 110 is performed. At this time, a method for forming the thermoplastic resin layer 140 is freely selected. For example, the thermoplastic resin layer 140 may be formed by applying a solution of a thermoplastic resin onto the surface 110U of the metal foil 110, and then drying. As an alternative example, the thermoplastic resin layer 140 may be formed by placing a film made of a thermoplastic resin on the surface 110U of the metal foil 110. This step provides the layered support 210 including the metal foil 110 and the thermoplastic resin layer 140.

In order to improve the adhesiveness between the metal foil and the Thermoplastic resin layer, the surface of the metal foil may be treated with a silane coupling agent, or a silane coupling agent may be added to the thermoplastic resin layer. Examples of the silane coupling agent used in the surface treatment for the metal foil may include an amino group-containing silane coupling agent and a mercapto group-containing silane coupling agent. Examples of the silane coupling agent to be contained in the thermoplastic resin layer may include an epoxy group-containing silane coupling agent, a vinyl group-containing silane coupling agent, and an isocyanate group-containing silane coupling agent. Examples of a method for treating the surface of the metal foil with a silane coupling agent may include a method for applying a silane coupling agent onto the surface of the metal foil, a method for spraying a silane coupling agent onto the surface of the metal foil, and a method for allowing the metal foil to stand in a silane coupling agent atmosphere. Examples of a method for adding a silane coupling agent to the thermoplastic resin layer may include publicly known methods, such as a method for adding a silane coupling agent to a thermoplastic resin and a method for applying a silane coupling agent onto the surface of the thermoplastic resin layer.

FIG. 6 is a vertical cross-sectional view schematically illustrating a CLC multilayer film 230 for describing an example of the method for producing the identification medium 100 according to the first embodiment of the present invention.

In the production method described in this example, as illustrated in FIG. 6, a step of preparing the CLC multilayer film 230 including a substrate film 220 and the cholesteric resin layer 120 is performed. The CLC multilayer film to may be produced by, for example, forming the cholesteric resin layer 120 on the substrate film 220 in accordance with the production method described below.

FIG. 7 is a vertical cross-sectional view schematically illustrating a layered intermediate 240 for describing an example of the method for producing the identification medium 100 according to the first embodiment of the present invention.

After the layered support 210 and the CLC multilayer film 230 are prepared, a step of bringing the thermoplastic resin layer 140 into contact with the cholesteric resin layer 120 by placing the CLC multilayer film 230 on the layered support 210 is performed. This step provides the layered intermediate 240 including the metal foil 110, the thermoplastic resin layer 140, the cholesteric resin layer 120, and the substrate film 220 in this order. In the step of bringing the thermoplastic resin layer 140 into contact with the cholesteric resin layer 120, at least one of the surfaces of the thermoplastic resin layer 140 and the cholesteric resin layer 120 is preferably hydrophilized in advance. The hydrophilization

treatment improves the adhesiveness between the thermoplastic resin layer 140 and the cholesteric resin layer 120. Examples of the hydrophilization treatment may include publicly known methods, such as a corona treatment, a plasma treatment, and a flame treatment.

Subsequently, a step of welding the thermoplastic resin layer 140 and the cholesteric resin layer 120 together is performed. In the example illustrated here, specifically, welding is performed in the following manner.

First, a horn 250 of an ultrasonic welding machine is placed contacting with the surface 220U of the layered intermediate 240 on a side of the substrate film 220. In order to effectively transmit the vibration of the horn 250 to the layered intermediate 240, a horn having a plurality of protrusions 251 on its part to be brought into contact with the substrate film 220 is preferably used as the horn 250. The position of the horn 250 is set in the region corresponding to the pattern to be formed in the identification medium 100.

In this state, the horn 250 is vibrated while pressing the horn against the surface 220U of the layered intermediate 240 on the side of the substrate film 220, thereby applying ultrasonic vibration. The vibration of the horn 250 is transmitted to the thermoplastic resin layer 140, which causes the thermoplastic resin layer 140 to vibrate. The vibrating thermoplastic resin layer 140 generates frictional heat between the metal foil 110 and the cholesteric resin layer 120, and melts due to the frictional heat.

Subsequently, by stopping the vibration of the horn 250, the melted thermoplastic resin layer 140 is cooled under pressure to be solidified. As a result, in the region to which the horn 250 has been applied, the cholesteric resin layer 120 is bonded to the metal foil 110 via the thermoplastic resin layer 140.

FIG. 8 is a vertical cross-sectional view schematically illustrating the identification medium 100 and the CLC multilayer film 230 for describing an example of the method for producing the identification medium 100 according to the first embodiment of the present invention.

After welding, a step of obtaining the identification medium 100 in FIG. 8 by separating the CLC multilayer film 230 from the layered support 210 illustrated in FIG. 7 is performed. Since the cholesteric resin layer 120 is bonded to the metal foil 110 via the thermoplastic resin layer 140 in the region where welding has been performed, the cholesteric resin layer 120 remains on the metal foil 110. In the region where welding has not been performed, the cholesteric resin layer 120 is separated from the thermoplastic resin layer 140 together with the substrate film 220. As a result, the cholesteric resin layer 120 is provided in the regions corresponding to the patterns 131 to 133 (see FIG. 1) on the surface 110U of the metal foil 110 via the thermoplastic resin layer 140. A desired identification medium 100 can thereby be produced.

Subsequently, as necessary, the thermoplastic resin layer 140 is removed in the region that does not require the thermoplastic resin layer 140, whereby an identification medium 100 having the thermoplastic resin layer 140 can be provided only directly under the cholesteric resin layer 120.

In the identification medium 100 according to this embodiment, the cholesteric resin layer 120 can be provided on the metal foil 110 by welding which is a simple method.

When the cholesteric resin layer 120 is formed on the metal foil 110, for example, the cholesteric resin layer 120 may be formed by providing the metal foil 110 with an alignment film such as a photo-alignment film, applying a cholesteric liquid crystal composition onto the alignment film, and curing the cholesteric liquid crystal composition. Compared with this method, the production method described in this embodiment may lead to cost reduction because the cholesteric resin layer 120 can be produced in a separate step and the cholesteric resin layer 120 is formed only in necessary parts. Furthermore, since there is no need to provide an alignment film on the metal foil 110, the number of steps required for producing the identification medium 100 can be reduced to achieve simple production. In addition, the shapes of the patterns 131 to 133 can be set by controlling the positions of the welded regions, and thus the patterns 131 to 133 can be changed easily.

[Second Embodiment]

Fig. 9 is a plan view schematically illustrating an identification medium according to a second embodiment of the present invention. FIG. 10 is a vertical cross-sectional view schematically illustrating the cross section of the identification medium illustrated in FIG. 9 taken along the broken line in FIG. 9.

As illustrated in Fig. 9 and FIG. 10, an identification medium 300 according to the second embodiment of the present invention has the same structure as the identification medium 100 according to the first embodiment except for having an isotropic layer 310.

The isotropic layer 310 is a layer having optical isotropy, and specifically the isotropic layer 310 has a front retardation Re of 0 nm or more and 10 nm or less at a wavelength of 550 nm. Such an isotropic layer 310 is usually viewed in the same way with or without a circularly polarizing plate. Therefore, the identification medium 300 having such an isotropic layer 310 may exhibit a function of identifying authenticity in the same manner as for the identification medium 100 according to the first embodiment.

In the identification medium 300 according to this embodiment, the isotropic layer 310 having the same thickness

was a cholesteric resin layer 120 is provided on the entire regions without the cholesteric resin layer 120 on a surface 110U of a metal foil 110 on a side of the cholesteric resin layer 120. The cholesteric resin layer 120 and the isotropic layer 310 thus exist in a mixed manner in a single layer in the identification medium 300. Therefore, the identification medium 300 according to this embodiment has advantages that scratches on the surface 110U of the metal foil 110 can be prevented and that damage to the cholesteric resin layer 120 due to a foreign material colliding with the cholesteric resin layer 120 can be prevented, in addition to the same advantages as of the identification medium 100 according to the first embodiment. In addition, the isotropic layer 310 can increase the mechanical strength of the identification medium 300.

The isotropic layer 310 is preferably transparent. Specifically, the total light transmittance of the isotropic layer 310 is preferably 85% or more, more preferably 90% or more, and particularly preferably 95% or more. As a result, a region with the cholesteric resin layer 120 and a region without the cholesteric resin layer 120 are observed as regions having similar colors when the surface 300U of the identification medium 300 on the side of the cholesteric resin layer 120 is viewed without using a circularly polarizing plate. This can make it difficult to recognize patterns 131 to 133 formed of the cholesteric resin layer 120. The light transmittance may be measured using a spectrophotometer (ultraviolet visible near-infrared spectrophotometer "V-570" available from Jasco Corporation) in accordance with JIS K0115.

The transparent isotropic layer 310 as described above can be formed of a resin, for example. In particular, a resin layer containing a polymer produced by polymerizing a polymerizable liquid crystal compound without aligning the liquid crystal compound is preferred.

A method for producing the identification medium 300 is not limited, and the identification medium 300 may be produced by, for example, welding in the same manner as for the identification medium 100 according to the first embodiment. In this case, the identification medium 300 may be produced by a production method including a step of disposing the thermoplastic resin layer 140 on the metal foil 110; a step of bringing the thermoplastic resin layer 140 into contact with the cholesteric resin layer 120 and the isotropic layer 310; and a step of welding the thermoplastic resin layer 140 with the cholesteric resin layer 120 and the isotropic layer 310. This production method will be described below by way of an example.

In the production method described in this example, as in the production method illustrated in the first embodiment and as illustrated in FIG. 5, a layered support 210 including the metal foil 110 and the thermoplastic resin layer 140 is prepared by performing a step of disposing the thermoplastic resin layer 140 on the surface 110U of the metal foil 110.

FIG. 11 is a vertical cross-sectional view schematically illustrating a CLC multilayer film 320 for describing an example of the method for producing the identification medium 300 according to the second embodiment of the present invention.

In the production method described in this example, as illustrated in FIG. 11, a step of preparing the CLC multilayer film 320 including the substrate film 220, the cholesteric resin layer 120, and the isotropic layer 310 is performed. By forming both the cholesteric resin layer 120 and the isotropic layer 310 on the substrate film 220, the cholesteric resin layer 120 and the isotropic layer 310 are formed to exist in a mixed manner in a single layer. Hereinafter, the single layer including the cholesteric resin layer 120 and the isotropic layer 310 may be appropriately referred to as a "mixed layer 330". The cholesteric resin layer 120 is formed at a position in the region corresponding to the pattern to be formed in the identification medium 300. The CLC multilayer film 320 may be produced by forming the cholesteric resin layer 120 and the isotropic layer 310 on the substrate film 220, for example, in accordance with the production method described below.

FIG. 12 is a vertical cross-sectional view schematically illustrating a layered intermediate 340 for describing an example of the method for producing the identification medium 300 according to the second embodiment of the present invention.

After the layered support 210 and the CLC multilayer film 320 are prepared, a step of bringing the thermoplastic resin layer 140 into contact with the cholesteric resin layer 120 and the isotropic layer 310 by placing the CLC multilayer film 320 on the layered support 210 is performed. As a result, the layered intermediate 340 including the metal foil 110, the thermoplastic resin layer 140, the mixed layer 330 including the cholesteric resin layer 120 and the isotropic layer 310, and the substrate film 220 in this order is obtained. The surface of at least one of the thermoplastic resin layer 140, the cholesteric resin layer 120, and the isotropic layer 310 is preferably hydrophilized prior to the step of bringing the thermoplastic resin layer 140 into contact with the cholesteric resin layer 120 and the isotropic layer 310. The hydrophilization treatment improves the adhesiveness between the thermoplastic resin layer 140 and the cholesteric resin layer 120 and the adhesiveness between the thermoplastic resin layer 140 and the isotropic layer 310. Examples of the hydrophilization treatment may include publicly known methods, such as a corona treatment, a plasma treatment, and a flame treatment.

Subsequently, a step of welding the thermoplastic resin layer 140 with the cholesteric resin layer 120 and the isotropic layer 310 is performed. In the example illustrated here, in the same manner as in the first embodiment, vibration is applied from the horn 250 to melt the thermoplastic resin layer 140, followed by cooling, to thereby effect bonding of

the cholesteric resin layer 120 and the isotropic layer 310 onto the metal foil 110. In the example illustrated here, the entire cholesteric resin layer 120 and the entire isotropic layer 310 are bonded to the metal foil 110 by performing the welding while changing the position of the horn 250.

FIG. 13 is a vertical cross-sectional view schematically illustrating the identification medium 300 and the substrate film 220 for describing an example of the method for producing the identification medium 300 according to the second embodiment of the present invention.

After welding, as illustrated in FIG. 13, a step of separating the substrate film 220 from the cholesteric resin layer 120 and the isotropic layer 310 is performed. Since welding is performed on the entire surface 110U of the metal foil 110 in this example, the entire cholesteric resin layer 120 and the entire isotropic layer 310 remain on the metal foil 110. As a result, the cholesteric resin layer 120 is provided in the regions corresponding to the patterns 131 to 133 (see FIG. 1) on the surface 110U of the metal foil 110 via the thermoplastic resin layer 140, whereas the isotropic layer 310 is provided in the other region via the thermoplastic resin layer 140. A desired identification medium 300 can thereby be produced.

[Modification]

The present invention is not limited to the embodiments described above and may be implemented with modification.

For example, patterns 131 to 133 formed of a cholesteric resin layer 120 are not limited to characters as illustrated in FIG. 1, and may be freely selected from, for example, numbers, symbols, and pictures.

In the second embodiment described above, the isotropic layer 310 is entirely provided on a region without the cholesteric resin layer 120 on the surface 110U of the metal foil 110. Alternatively, the isotropic layer 310 may be only partially provided in a region without the cholesteric resin layer 120 on the surface 110U of the metal foil 110.

Although an ultrasonic welding method is used as a welding method for producing the identification media 100 and 300 in the embodiments described above, a welding method other than the ultrasonic welding method may also be used. Examples of the welding method may include a vibration welding method, an induction welding method, a high-frequency welding method, a semiconductor-laser welding method, a thermal welding method, and a spin welding method. Of these methods, a welding method that can decrease the size of the welding area is preferred in order to accurately draw the patterns 131 to 133 in the identification media 100 and 300 and to increase the design freedom of the patterns 131 to 133. From such viewpoints, an ultrasonic welding method is particularly preferred as a method of welding by application of heat in a small area.

Although the cholesteric resin layer 120 and the isotropic layer 310 are prepared as the CLC multilayer films 220 and 320 including the substrate film 220 in the production methods exemplified in the embodiments described above, the substrate film 220 is not necessarily used. However, the substrate film 220 is used preferably from the viewpoint of workability improvement and prevention of scratches on the cholesteric resin layer 120 and the isotropic layer 310.

The identification media 100 and 300 may further include another authenticity identification means in addition to an authenticity identification means of the cholesteric resin layer 120. For example, the identification media 100 and 300 may further include another authenticity identification means, such as a hologram, a watermark, a micro-character, and printing with a special ink such as a fluorescent ink, a magnetic ink, and an infrared-reflective ink.

[Metal Foil]

A metal foil is a sheet-shaped member formed of a metal material. The metal foil has excellent properties, namely, the shape can be changed easily and shape conformability is high.

Examples of metal materials for forming such a metal foil may include simple metal substances and metal alloys. Of these, metal materials having shape conformability when made in a form of a foil are preferred. A metal material may be used alone, and two or more thereof in combination may also be used at any ratio. Examples of metal materials may include those listed in the following tables.

[Table 1: examples of metal materials (simple substances)]

| Name | Reflected color | Name | Reflected color |
|---|---|---|---|
| Aluminium | Oxide layer, white | Silicon | Dark gray |
| Beryllium | Grayish white | Strontium | Oxide layer, silvery-white yellow |
| Boron | Black | Tantalum | Silvery-white |
| Calcium | Oxide layer, silvery-white | Tellurium | Silvery-white |

(continued)

| Name | Reflected color | Name | Reflected color |
|---|---|---|---|
| Cobalt | Blue | β-Tin | Silvery-white |
| Dysprosium | Silvery-white | Tungsten | Silver-gray |
| Europium | Silvery-white | Yttrium | Silvery-white |
| Antimony | Silvery-white | Zinc | Silvery-white |
| Bismuth | Silvery-white | Germanium | Silvery-white |
| Cerium | Silvery-white | Hafnium | Silver |
| Cadmium | Silvery-white | Indium | Silvery-white |
| Chromium | Silvery-white | Iron | Oxide layer, dark green |
| Copper | Orange-red | Lead | Blue-gray |
| Erbium | Pale pink | Magnesium | Silvery-white |
| Gadolinium | Silvery-white | Molybdenum | Silvery-white |
| Gallium | Silvery-white | Nickel | Silvery-white |
| Gold | Yellow | Osmium | Bluish silvery-white |
| Holmium | Silvery-white | Platinum | Silvery-white |
| Iridium | Silvery-white | Rhenium | Black |
| Lanthanum | Silvery-white | Rubidium | Oxide layer, silvery-white |
| Lutetium | Silvery-white | Samarium | Oxide layer, silvery-white |
| Manganese | Black | Selenium | Black or red |
| Neodymium | Silvery-white | Silver | White |
| Niobium | Silvery-white | Terbium | Silvery-white |
| Palladium | Silvery-white | Thulium | Silvery-white |
| Praseodymium | Silvery-white | Titanium | Silvery-white |
| Rhodium | Silvery-white | Vanadium | Bluish silvery-white |
| Ruthenium | Silvery-white | Ytterbium | Silvery-white |
| Scandium | Silvery-white | Zirconium | White |

[Table 2: examples of metal materials (alloy)]

| Name | Reflected color | Name | Reflected color |
|---|---|---|---|
| Shakudo (copper gold) | Reddish-brown | Platinum Rhodium | Silvery-white |
| Al-Mg-Silicon | Dark gray | Silver Copper | Oranqe red |
| Aluminum-Magnesium | Gray | Gold Solder | Gold |
| Beryllium Copper | Yellow | Tin-Lead | White |
| Cupro Nickel | Gray | Rhenium-Tunqsten | Silver-gray |
| Gilding Metal | Yellow | Alumel-Chromel | Gray |
| Gold Antimony | Yellow | Copper Constantan | Gray |
| Gold Gallium | Yellow | Gold Iron Chromel | Grav |
| Gold Palladium | Gray | Indium/Phosphorus | Silver |

(continued)

| Name | Reflected color | Name | Reflected color |
|---|---|---|---|
| Inconel (Ni (nitride) | Yellow | Gallium/Antimony | Silvery-white |
| Invar | Yellow | Thoriated Tungsten | Silvery-white |
| Iron Chrome | | Tungsten Carbide | Gray |
| Kovar | Grav | Waspaloy | Silvery-white |
| Moleculoy | | Zircaloy | White |
| Numetal | Yellow | Phosphor Bronze | Yellow |
| Copper Nickel | Gray | Platinum Iridium | Silvery-white |
| Nickel Silver | Gray | Silver Solder | Silvery-white |
| Permalloy-45 | Yellow | Tungsten Carbide-Titanium | Gray |
| Alchrom | Orange-red | Constantan | Gray |
| Aluminum-Lithium | Silvery-white | Brass (Cu60-70%, Zn30-40%) | Yellow |
| Aluminum-Silicon | Silvery-white | Duralumin | Silvery-white |
| Bimetal | Silvery-white | Indium Arsenide | Black |
| Copper-Tungsten | Silvery-white | Gallium Arsenide | Black |
| Dumet | Reddish brown | Gallium-Phosphorus | Greenish yellow |
| Gallium/ Germanium | Silvery-white | Thoriated Tungsten | Gray |
| Glassy Carbon | Black | Titanium alloy | Grav |
| Gold Germanium | Yellow | Titanium-Zirconia-Molybdenum alloy | Gray |
| Gold Molybdenum | Yellow | U-alloy | White |
| Hastelloy | Black | SUS301 | Yellow |
| Super-Invar | Amber | SUS316L | |
| Iron Chrom 30 | Black | SUS347 | |
| Kanthal | Silver-Gray | SUS631 | |
| Manganin | Orange-red | SUS17-7PH | |
| Monel | Gray | SUS302 | |
| Nickel-Beryllium | Yellow | SUS304 | |
| Nichrome | Black | SUS321 | |
| Palladium Silver | Silvery-white | SUS430 | |
| Piano | Gray | SUS15-7PH | |
| Platinum Palladium | Silvery-white | | |

The thickness of the metal foil is preferably, but not particularly limited to, 5 μm or more, more preferably 10 μm or more, and particularly preferably 30 μm or more, and is preferably 300 μm or less, more preferably 100 μm or less, and particularly preferably 80 μm or less. When the thickness of the metal foil is set to be equal to or more than the lower limit of the aforementioned range, flexibility can be imparted to the metal foil while keeping its rigidity, and the surface of the metal foil can be mirror-finished. When the thickness of the metal foil is equal to or less than the upper limit, flexibility can be imparted to the metal foil, and the surface of the metal foil can be mirror-finished.

The metal foil may be produced by, for example, stretching a metal material into a thin film by using its ductility. Alternatively, the metal foil may be produced by, for example, forming a layer made of a metal material on a substrate, such as a plastic film, paper, and a non-woven fabric. Examples of a method for providing the metal layer may include a metal deposition method, a sputter deposition method, a plating method, and a method of applying an ink in which

metal particles are dispersed.

[Cholesteric Resin Layer]

A cholesteric resin layer is a resin layer having cholesteric regularity. The cholesteric regularity possessed by the cholesteric resin layer refers to a structure in which the angles of molecular axes in stacking planes are shifted (twisted) as the planes are observed sequentially passing through the stacked planes, such that molecular axes in a first plane are oriented in a certain direction, molecular axes in a subsequent plain stacking on the first plane are oriented in a direction shifted by a small angle with respect to that of the first plane, and molecular axes in still another plane are oriented in a direction of a further shifted angle. Such a structure in which the orientation of molecular axes is twisted constitutes an optically chiral structure.

The cholesteric resin layer usually has a function of separating circularly polarized light. That is, the cholesteric resin layer transmits one circularly polarized light selected from right-handed circularly polarized light and left-handed circularly polarized light, and reflects part or all of the other circularly polarized light. In the reflection by the cholesteric resin layer, circularly polarized light is reflected while keeping its chirality.

The wavelength for exhibiting the function of separating circularly polarized light depends on the pitch of the helical structure in the cholesteric resin layer. The pitch of the helical structure refers to a distance in the normal direction from a plane in the helical structure to another plane in which the molecular axis direction that is displaced in small angle plane-by-plane returns to the original molecular axis direction. The wavelength for exhibiting the function of separating circularly polarized light can be changed by changing the length of the pitch of the helical structure.

The refractive-index anisotropy $\Delta n$ of the cholesteric resin layer is preferably 0.20 or higher and more preferably 0.22 or higher. When the cholesteric resin layer has such high $\Delta n$, the wavelength range capable of reflecting circularly polarized light can be enlarged. The cholesteric resin layer having such high $\Delta n$ can be formed by using a liquid crystal composition, such as a cholesteric liquid crystal composition (X) described below. When $\Delta n$ is 0.30 or higher, the absorption edge of the ultraviolet absorption spectrum on the long wavelength side may reach the visible range. However, even if the absorption edge reaches the visible range, the cholesteric resin layer can be used unless a desired optical performance is adversely affected. Here, $\Delta n$ can be determined by the Senarmont method. The upper limit of the refractive-index anisotropy $\Delta n$ may be, for example, 0.25 or lower.

The cholesteric resin layer can be produced by, for example, providing a layer of a cholesteric liquid crystal composition on an appropriate substrate film for forming the cholesteric resin layer, and curing the layer. According to this production method, like the CLC multilayer film 230 according to the first embodiment, a film having the cholesteric resin layer 120 on the substrate film 220 can be produced.

As the cholesteric liquid crystal composition for forming the cholesteric resin layer, a composition that contains a liquid crystal compound and that can exhibit a cholesteric liquid crystal phase when being formed into a layer can be used. As the liquid crystal compound, a liquid crystal compound that is a polymer compound and a polymerizable liquid crystal compound can be used. A polymerizable liquid crystal compound is preferably used in order to obtain high thermal stability. By polymerizing the polymerizable liquid crystal compound in a state of exhibiting cholesteric regularity, the layer of the cholesteric liquid crystal composition is cured to thereby provide a non-crystalline resin layer that is a cured product while exhibiting cholesteric regularity. For the sake of convenience, a material referred to as the liquid crystal composition encompasses not only a mixture of two or more substances but also a material composed of a single substance.

Examples of the cholesteric resin layer may include a cholesteric resin layer (i) having a helical structure in which the length of the pitch is changed stepwisely, and a cholesteric resin layer (ii) having a helical structure in which the length of the pitch is changed continuously.

The cholesteric resin layer (i) having a helical structure in which the length of the pitch is changed stepwisely can be obtained by stacking a plurality of cholesteric resin layers having different pitches of the helical structures. Stacking can be performed by preparing, in advance, a plurality of cholesteric resin layers having different pitches of the helical structures and subsequently bonding the cholesteric resin layers to each other via a sticky agent or an adhesive agent. Alternatively, stacking can be performed by forming a cholesteric resin layer and sequentially forming thereon another cholesteric resin layer.

The cholesteric resin layer (ii) having a helical structure in which the length of the pitch is changed continuously is not particularly limited by the production method thereof. A preferred example of the method for producing such a cholesteric resin layer includes: applying a cholesteric liquid crystal composition containing a polymerizable liquid crystal compound for forming a cholesteric resin layer onto another film that are preferably a stretched film or an alignment film so as to obtain a layer of the liquid crystal composition; and then performing one or more times of light irradiation and/or heating, to cure the layer with the pitch of the helical structure being continuously changed. Since a process of continuously changing the pitch of the helical structure is a process of broadening the reflection band of the cholesteric resin layer, it is called a band broadening process. A preferred aspect of the cholesteric liquid crystal composition to be subjected

to such a band broadening process is the cholesteric liquid crystal composition (X) described below in detail.

Only one layer of the cholesteric resin layer (ii) having a helical structure in which the length of the pitch is changed continuously may be used as the cholesteric resin layer for use in the identification medium. Alternatively, a plurality of the layers of the cholesteric resin layers (ii) may be stacked for use in the identification medium. For example, a cholesteric resin layer exhibiting a function of separating circular polarized light in one region of the visible light wavelength range may be combined with a cholesteric resin layer exhibiting a function of separating circular polarized light in another region. This combination of the cholesteric resin layers can be used as a cholesteric resin layer exhibiting a function of separating circular polarized light in a wide range in the visible light wavelength range.

The cholesteric resin layer to be used in the identification medium may be composed of a single resin layer or may be composed of two or more resin layers, such as stacked layers including either or both of the above-described cholesteric resin layer (i) and the above-described cholesteric resin layer (ii). The number of layers constituting the cholesteric resin layer is preferably 1 to 100 and more preferably 1 to 20 from the viewpoint of ease in production. When a single cholesteric resin layer that alone exhibits high visible light average reflectance is obtained as a result of the band broadening process described above, a preferred aspect of the identification medium can be obtained by solely using this one layer.

The cholesteric liquid crystal composition (X) contains a compound represented by the formula (1) described below and a particular rod-shaped liquid crystal compound. These components will be sequentially described.

$$R^1\text{-}A^1\text{-}B\text{-}A^2\text{-}R^2 \qquad (1)$$

In the formula (1), $R^1$ and $R^2$ each independently represent a group selected from the group consisting of a linear or branched alkyl group having 1 to 20 carbon atoms, a linear or branched alkylene oxide group having 1 to 20 carbon atoms, a hydrogen atom, a halogen atom, a hydroxyl group, a carboxyl group, a (meth)acrylic group optionally with any linking group, an epoxy group, a mercapto group, an isocyanate group, an amino group, and a cyano group.

The alkyl group and the alkylene oxide group may be unsubstituted or substituted by one or more halogen atoms. The halogen atom, the hydroxyl group, the carboxyl group, the (meth)acrylic group, the epoxy group, the mercapto group, the isocyanate group, the amino group, and the cyano group may be bonded to an alkyl group or an alkylene oxide group having 1 to 2 carbon atoms.

Examples of suitable $R^1$ and $R^2$ may include a halogen atom, a hydroxyl group, a carboxyl group, a (meth) acrylic group, an epoxy group, a mercapto group, an isocyanate group, an amino group, and a cyano group.

At least one of $R^1$ and $R^2$ is preferably a reactive group. When at least one of $R^1$ and $R^2$ is a reactive group, the compound represented by the formula (1) described above is fixed in the cholesteric resin layer during curing, thereby forming a stronger layer. Examples of the reactive group may include a carboxyl group, a (meth)acrylic group optionally with any linking group, an epoxy group, a mercapto group, an isocyanate group, and an amino group.

In the formula (1), $A^1$ and $A^2$ each independently represent a group selected from the group consisting of a 1,4-phenylene group, a 1,4-cyclohexylene group, a 1,4-cyclohexenyl group, a 4,4'-biphenylene group, a 4,4'-bicyclohexylene group, and a 2,6-naphthylene group. The 1,4-phenylene group, the 1,4-cyclohexylene group, the 1,4-cyclohexenyl group, the 4,4'-biphenylene group, the 4,4'-bicyclohexylene group, and the 2,6-naphthylene group may be unsubstituted or substituted by one or more substituents, such as a halogen atom, a hydroxyl group, a carboxyl group, a cyano group, an amino group, and an alkyl group or an alkyl halide group having 1 to 10 carbon atoms. When $A^1$ and $A^2$ each have two or more substituents, these substituents may be the same as or different from each other.

Particularly preferably, groups as $A^1$ and $A^2$ are selected from the group consisting of a 1,4-phenylene group, a 4,4'-biphenylene group, and a 2,6-naphthylene group. Compared with alicyclic skeletons, these aromatic skeletons are relatively rigid, and have high affinity for mesogen moieties of rod-shaped liquid crystal compounds. Therefore, this skeletons bring about higher ability to cause alignment uniformity.

In the formula (1), B is selected from the group consisting of a single bond, -O- -S-, -S-S-, -CO-, -CS-,-OCO-, $-CH_2-$, $-OCH_2-$, -CH=N-N=CH-, -NHCO-, -OCOO-, $-CH_2COO-$, and $-CH_2OCO-$.

Examples of particularly preferred B may include a single bond, -OCO-, and -CH=N-N=CH-.

At least one of the compounds represented by the formula (1) preferably has liquid crystallinity and preferably has chirality. It is preferable to use a combination of a plurality of optical isomers of the compounds represented by the formula (1). For example, a mixture of a plurality of types of enantiomers, a mixture of a plurality of types of diastereomers, or a mixture of an enantiomer and a diastereomer may be used. At least one of the compounds represented by the formula (1) preferably has a melting point in the range of 50°C to 150°C.

When the compound represented by the formula (1) has liquid crystallinity, the compound preferably has high $\Delta n$. When the cholesteric liquid crystal composition (X) contains the liquid crystal compound having high $\Delta n$, $\Delta n$ of the cholesteric liquid crystal composition (X) can be increased, and the cholesteric resin layer having a wide selective reflection band can be produced. At least one of the compounds represented by the formula (1) preferably has $\Delta n$ of 0.18 or higher and more preferably has $\Delta n$ of 0.22 or higher. The upper limit of $\Delta n$ may be, for example, 0.25 or lower.

Specific examples of particularly preferred compounds represented by the formula (1) may include compounds (A1) to (A9) described below. The compounds represented by the formula (1) may be used alone or in combination of two or more at any ratio.

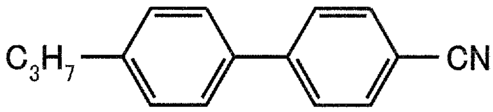
(A1)

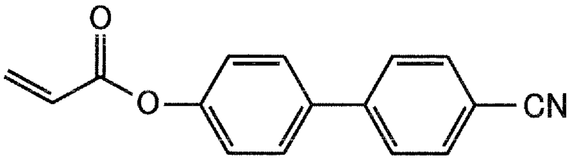
(A2)

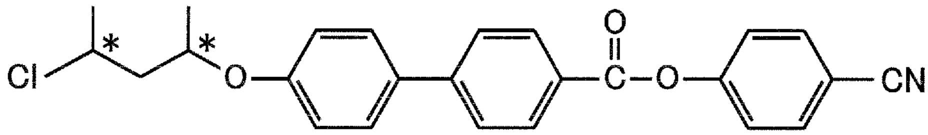
(A3)

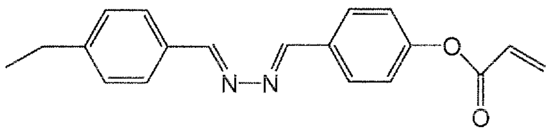
(A4)

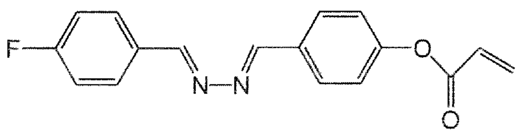
(A5)

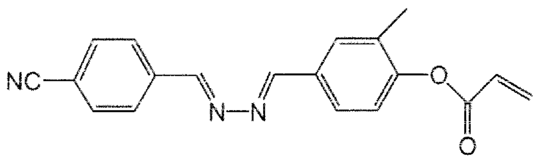
(A6)

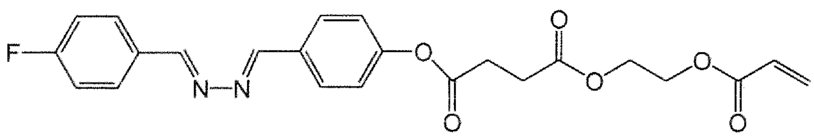
(A7)

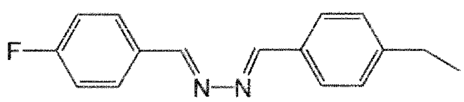
(A8)

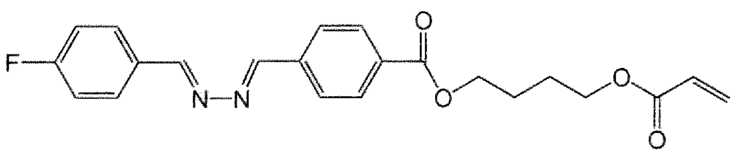
(A9)

In the compound (A3), "*" represents a chiral center.

The cholesteric liquid crystal composition (X) contains a rod-shaped liquid crystal compound having at least two or more reactive groups per molecule.

Suitable examples of the aforementioned rod-shaped liquid crystal compound may include the compounds represented by the formula (2).

$R^3$-$C^3$-$D^3$-$C^5$-M-$C^6$-$D^4$-$C^4$-$R^4$ formula (2)

In the formula (2), $R^3$ and $R^4$ are reactive groups and each independently represent a group selected from the group consisting of a (meth)acrylic group, a (thio)epoxy group, an oxetane group, a tietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group. $D^3$ and $D^4$ represent a group selected from the group consisting of a single bond, a linear or branched alkyl group having 1 to 20 carbon atoms, and a linear or branched alkylene oxide group having 1 to 20 carbon atoms. $C^3$ to $C^6$ each independently represent a group selected from the group consisting of a single bond, -O-, -S-, -S-S, -CO-,-CS-, -OCO-, -$CH_2$-, -$OCH_2$-, -CH=N-N-CH-, -NHCO-, -OCOO-,-$CH_2COO$-, and -$CH_2OCO$-. M represents a mesogenic group. Specifically, the mesogenic group is formed by bonding 2 to 4 skeletons selected from the group consisting of azomethines, azoxys, phenyls, biphenyls, terphenyls, naphthalenes, anthracenes, benzoic acid esters, cyclohexane carboxylic acid phenyl esters, cyanophenyl cyclohexanes, cyano-substituted phenylpyrimidines, alkoxy-substituted phenylpyrimidines, phenyldioxanes, tolans, alkenyl cyclohexylbenzonitriles, all of which may be unsubstituted or may have a substituted group, through a bonding group, such as -O-, -S-, -S-S-, -CO-, -CS-, -OCO-, -$CH_2$-, -$OCH_2$-, -CH=N-N=CH-, -NHCO-, -OCOO-, -$CH_2COO$-, and -$CH_2OCO$-.

Examples of the substituent the mesogenic group M may have may include halogen atoms, an alkyl group of 1 to 10 carbon atoms that may have a substituent, a cyano group, a nitro group, -O-$R^5$, -O-C(=O)-$R^5$, -C(=O)-O-$R^5$, -O-C(=O)-O$R^5$, -N$R^5$-C(=O)-$R^5$, -C(=O)-N$R^5R^7$, and -O-C(=O)-N$R^5R^7$. In the formula, $R^5$ and $R^7$ represent a hydrogen atom and an alkyl group having 1 to 10 carbon atoms. When $R^5$ and $R^7$ are alkyl groups, the alkyl group may include intervening -O-, -S-, -O-C(=O)-, -C(=O)-O-, -O-C(=O)-O-, -N$R^6$-C(=O)-,-C(=O)-N$R^6$-, -N$R^6$-, or -C(=O)- (excluding the case where the alkyl group includes two or more intervening -O- or -S-adjacent to each other). $R^6$ represents a hydrogen atom or an alkyl group having 1 to 6 carbon atoms.

Examples of the substituent in the "alkyl group that may have a substituent and that has 1 to 10 carbon atoms" may include a halogen atom, a hydroxyl group, a carboxyl group, a cyano group, an amino group, alkoxy groups having 1 to 6 carbon atoms, an alkoxyalkoxyl group having 2 to 8 carbon atoms, an alkoxyalkoxyalkoxy group having 3 to 15 carbon atoms, an alkoxycarbonyl group having 2 to 7 carbon atoms, an alkylcarbonyloxy group having 2 to 7 carbon atoms, and an alkoxycarbonyloxy group having 2 to 7 carbon atoms.

The aforementioned rod-shaped liquid crystal compound preferably has an asymmetric structure. The asymmetric structure refers to the structure represented by the formula (2) where $R^3$-$C^3$-$D^3$-$C^5$- differs from -$C^6$-$D^4$-$C^4$-$R^4$ about the mesogenic group M. The use of the rod-shaped liquid crystal compound having an asymmetric structure can further increase the alignment uniformity.

The rod-shaped liquid crystal compound preferably has $\Delta n$ of 0.18 or higher and more preferably has $\Delta n$ of 0.22 or higher. When the compound having $\Delta n$ of 0.30 or higher is used, the absorption edge of the ultraviolet absorption spectrum on the long wavelength side may reach the visible range. However, even if the absorption edge of the spectrum reaches the visible range, such a compound may be used unless a desired optical performance is adversely affected. The use of such a compound having high $\Delta n$ can provide a cholesteric resin layer having high optical performance (for example, selective reflection of circularly polarized light). The upper limit of the refractive-index anisotropy $\Delta n$ may be, for example, 0.25 or lower.

The rod-shaped liquid crystal compound may have two or more reactive groups per molecule. Examples of the reactive group may include an epoxy group, a thioepoxy group, an oxetane group, a tietanyl group, an aziridinyl group, a pyrrole group, a fumarate group, a cinnamoyl group, an isocyanate group, an isothiocyanate group, an amino group, a hydroxyl group, a carboxyl group, an alkoxysilyl group, an oxazoline group, a mercapto group, a vinyl group, an allyl group, a methacrylic group, and an acrylic group. When the rod-shaped liquid crystal compound has such a reactive group, a stable cured product having layer strength sufficient for practical use can be obtained as a result of curing the cholesteric liquid crystal composition. The layer strength sufficient for practical use refers to usually HB or higher and preferably H or higher in terms of pencil hardness (JIS K5400). Such high layer strength makes it less prone to have scratches and provides favorable handleability. The upper limit of preferred pencil hardness is not limited unless the optical performance or the durability test is adversely affected.

Specific examples of preferred rod-shaped liquid crystal compounds may include, but are not limited to, compounds (B1) to (B9) described below. As the rod-shaped liquid crystal compound, one type thereof may be used alone, and two or more types thereof in combination may also be used at any ratio.

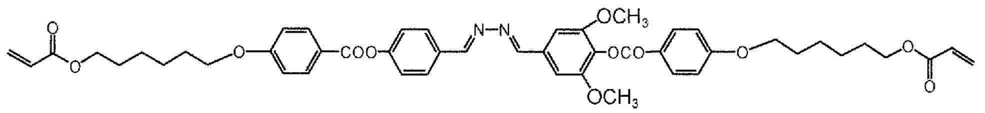
(B1)

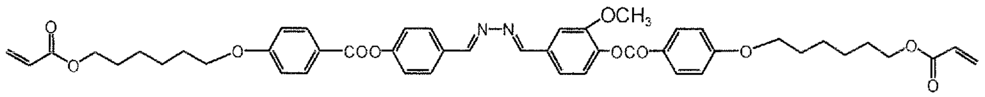
(B2)

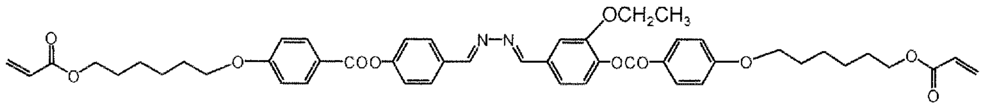
(B3)

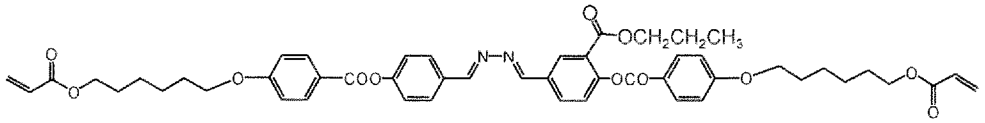
(B4)

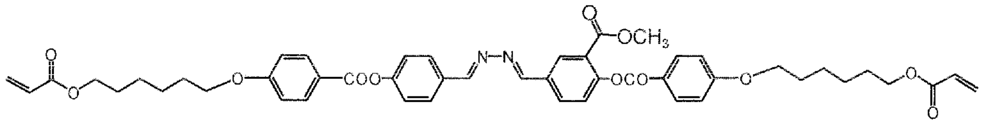
(B5)

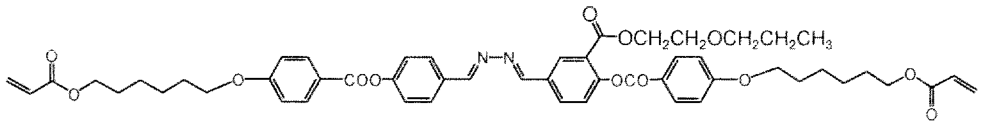
(B6)

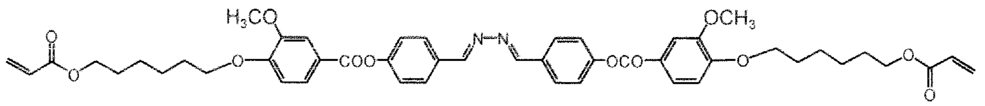
(B7)

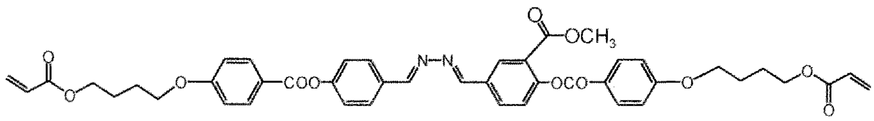
(B8)

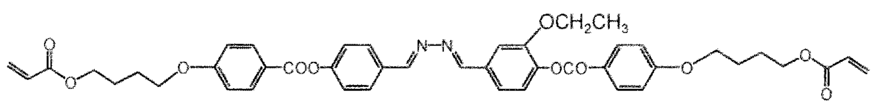
(B9)

The weight ratio of (the total weight of the compound represented by the formula (1))/(the total weight of the rod-shaped liquid crystal compound) is preferably 0.05 or higher, more preferably 0.1 or higher, and particularly preferably 0.15 or higher, and is preferably 1 or lower, more preferably 0.65 or lower, particularly preferably 0.45 or lower. When the weight ratio is equal to or larger than the lower limit of the aforementioned range, alignment uniformity of the layer of the liquid crystal composition can be increased. When the weight ratio is equal to or smaller than the upper limit, high alignment uniformity can be achieved. In addition, stability of the liquid crystal phase of the liquid crystal composition can be improved. In addition, since the $\Delta n$ of the liquid crystal composition can be improved, a cholesteric resin layer having a desired optical performance (for example, selective reflection of circularly polarized light) can be obtained stably. The total weight here refers to the weight of the compound when one type of the compound is used alone or refers to the total weight of the compounds when two or more are used in combination.

In the cholesteric liquid crystal composition (X), the molecular weight of the compound represented by the formula (1) is preferably smaller than 600, and the molecular weight of the rod-shaped liquid crystal compound is preferably 600 or larger. As a result, fluidity of the cholesteric liquid crystal composition is increased, thereby improving

the alignment uniformity of the liquid crystal.

A cholesteric liquid crystal composition such as the cholesteric liquid crystal composition (X) may optionally contain a crosslinking agent for improving the layer strength and durability after curing. The crosslinking agent can increase the crosslinking density of the cholesteric resin layer by, for example, a reaction in curing the layer of the liquid crystal composition, by acceleration of a reaction by a heat treatment after curing, or by a spontaneous reaction by humidity. As the crosslinking agent, those that can react by, for example, ultraviolet rays, heat, or humidity may be used. Of these, crosslinking agents that do not degrade the alignment uniformity are preferred.

Specific examples of the crosslinking agent may include polyfunctional acrylate compounds such as trimethylolpropane tri(meth)acrylate, pentaerythritol tri(meth)acrylate, pentaerythritol tetra(meth)acrylate, dipentaerythritol hexa(meth)acrylate, and 2-(2-vinyloxyethoxy)ethyl acrylate; epoxy compounds such as glycidyl(meth)acrylate, ethylene glycol diglycidyl ether, glycerol triglycidyl ether, and pentaerythritol tetra glycidyl ether; aziridine compounds such as 2,2-bis hydroxymethylbutanol-tris[3-(1-aziridinyl)propionate], 4,4-bis(ethyleneiminocarbonylamino)diphenylmethane, and trimethylolpropane-tri-β-aziridinyl propionate; isocyanate compounds such as hexamethylene diisocyanate, isocyanurate-type isocyanate derived from hexamethylene diisocyanate, biuret-type isocyanate, and adduct-type isocyanate; a polyoxazoline compound having an oxazoline group in a side chain; and alkoxysilane compounds such as vinyltrimethoxysilane, N-(2-aminoethyl)3-aminopropyltrimethoxysilane, 3-aminopropyltrimethoxysilane, 3-glycidoxypropyltrimethoxysilane, 3-(meth)acryloxypropyltrimethoxysilane, and N-(1,3-dimethylbutylidene)-3-(triethoxysilyl)-1-propanamine. As the crosslinking agent, one type thereof may be used alone, and two or more types thereof may also be used in combination at any ratio. In addition, a publicly known catalyst may be used in accordance with the reactivity of the cross-linking agent. The use of the catalyst can improve the layer strength and durability as well as productivity.

The amount of the crosslinking agent in the cholesteric resin layer obtained by curing the cholesteric liquid crystal composition is preferably 0.1% by weight to 15% by weight. When the amount of the crosslinking agent is equal to or larger than the lower limit of the aforementioned range, the crosslinking density can be effectively increased. When the amount of the crosslinking agent is equal to or smaller than the upper limit, the cholesteric liquid crystal composition can maintain its alignment uniformity of the liquid crystal.

The cholesteric liquid crystal composition may optionally contain a photoinitiator. As the photoinitiator, for example, a publicly known compound that can generate a radical or an acid by ultraviolet rays or visible rays can be used. Specific examples of the photoinitiator may include benzoin, benzyl methyl ketal, benzophenone, biacetyl, acetophenone, Michler's ketone, benzyl, benzyl isobutyl ether, tetramethylthiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propan-1-one, 1-(4-isopropylphenyl)-2-hydroxy-2-methylpropan-1-one, thioxanthone, 2-chlorothioxanthone, 2-methylthioxanthone, 2,4-diethyl thioxanthone, methyl benzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, pp'-dichlorobenzophenone, pp'-bisdiethylamino benzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1-[4-(methylthio)phenyl]-2-morpholinopropan-1-one, 2-benzyl-2-dimethylamino-1-(4-morpholinophenyl)-butan-1-one, anthracene benzophenone, α-chloroanthraquinone, diphenyldisulfide, hexachlorobutadiene, pentachlorobutadiene, octachlorobutene, 1-chloromethylnaphthalene, 1,2-octanedione, carbazole oxime compounds such as 1-[9-ethyl-6-(2-methylbenzoyl)-9H-carbazol-3-yl]ethanone 1-(o-acetyloxime) and 1-[4-(phenylthio)-2-(o-benzoyloxime)], (4-methylphenyl)[4-(2-methylpropyl)phenyl]iodonium hexafluorophosphate, 3-methyl-2-butynyl tetramethyl sulfonium hexafluoroantimonate, and diphenyl-(p-phenylthiophenyl)sulfonium hexafluoroantimonate. As the photoinitiator, one type thereof may be used alone, and two or more types thereof may also be used in combination at any ratio. As necessary, a tertiary amine compound that is a publicly known photosensitizer or polymerization accelerator may be further used to control curability.

The amount of the photoinitiator is preferably 0.03% by weight to 7% by weight in the cholesteric liquid crystal composition. When the amount of the photoinitiator is equal to or larger than the lower limit of the aforementioned range, the degree of polymerization can be increased, and thus the layer strength of the cholesteric resin layer thus can be increased. When the amount of the photoinitiator is equal to or smaller than the upper limit, alignment of the liquid crystal compound can be improved, and thus the liquid crystal phase of the liquid crystal composition can be stabilized.

The cholesteric liquid crystal composition may optionally contain a surfactant. As the surfactant, for example, a surfactant that does not inhibit alignment may be appropriately selected and used. Suitable examples of such a surfactant may include nonionic surfactants containing siloxane or a fluorinated alkyl group in its hydrophobic group moiety. Of these, oligomers having two or more hydrophobic group moieties per molecule are particularly suitable. Specific examples of these surfactants may include PolyFox "PF-151N", "PF-636", "PF-6320", "PF-656", "PF-6520", "PF-3320", "PF-651", and "PF-652" available from OMNOVA Solutions Inc.,; FTERGENT "FTX-209F", "FTX-208G", and "FTX-204D" available from NEOS COMPANY LIMITED; and Surflon "KH-40" available from Seimi Chemical Co., Ltd. As the surfactant, one type thereof may be used alone, and two or more types thereof may also be used in combination

at any ratio.

The amount of the surfactant in the cholesteric resin layer obtained by curing the cholesteric liquid crystal composition is preferably 0.05% by weight to 3% by weight. When the amount of the surfactant is equal to or larger than the lower limit of the aforementioned range, the alignment regulating force in the interface with air can be increased, and thus alignment defects can be prevented. When the amount of the surfactant is equal to or smaller than the upper limit, a degradation in alignment uniformity caused by entry of an excessive amount of the surfactant into spaces among the liquid crystal molecules can be prevented.

The cholesteric liquid crystal composition may optionally include a chiral agent. Specific examples of the chiral agent that can be appropriately used may include those described in Japanese Patent Application Laid-Open No. 2005-289881 A, Japanese Patent Application Laid-Open No. 2004-115414 A, Japanese Patent Application Laid-Open No. 2003-66214 A, Japanese Patent Application Laid-Open No. 2003-313187 A, Japanese Patent Application Laid-Open No. 2003-342219 A, Japanese Patent Application Laid-Open No. 2000-290315 A, Japanese Patent Application Laid-Open No. Hei. 6-072962 A, U.S. Patent No. 6468444, WO 98/00428, and Japanese Patent Application Laid-Open No. 2007-176870 A. For example, the chiral agent can be obtained as PALIOCOLOR LC 756 available from BASF SE. As the chiral agent, one type thereof may be used alone, and two or more types thereof may also be used in combination at any ratio.

The amount of the chiral agent can be freely set in a range in which a desired optical performance is not degraded. A specific amount of the chiral agent is usually 1% by weight to 60% by weight in the cholesteric liquid crystal composition.

The cholesteric liquid crystal composition may further contain optional components as necessary. Examples of optional components may include a solvent, a polymerization inhibitor for improving pot life, an antioxidant for improving durability, an ultraviolet ray absorber, and a photostabilizer. As the optional component, one type thereof may be used alone, and two or more types thereof may also be used in combination at any ratio. The amount of these optional components may be set in the range in which a desired optical performance is not degraded.

The method for producing the cholesteric liquid crystal composition is not limited, and the cholesteric liquid crystal composition can be produced by mixing the above-described components.

A cholesteric resin layer can be obtained by preparing a cholesteric liquid crystal composition, then providing a layer of the cholesteric liquid crystal composition on a substrate film, performing an alignment treatment if necessary, and then performing a curing treatment.

As the substrate film, a film having a total light transmittance such that, when the film has a thickness of 1 mm, the total light transmittance is 80% or higher is usually used. Specific examples of the substrate film may include monolayer films and layered films formed of a synthetic resin(s) such as an alicyclic olefin resin, a chain olefin resin such as a polyethylene resin or a polypropylene resin, a triacetyl cellulose resin, a polyvinyl alcohol resin, a polyimide resin, a polyarylate resin, a polyester resin, a polycarbonate resin, a polysulfone resin, a polyether sulfone resin, a modified acrylic resin, an epoxy resin, a polystyrene resin, and an acrylic resin. Of these, a film formed of an alicyclic olefin resin or a linear olefin resin is preferred, and a film formed of an alicyclic olefin resin is particularly preferred from the viewpoints of transparency, low hygroscopicity, size stability, lightness in weight, and the live.

An alignment film may be provided on the substrate film before the layer of the cholesteric liquid crystal composition is provided. The alignment film may be formed of, for example, cellulose, a silane coupling agent, polyimide, polyamide, polyvinyl alcohol, epoxy acrylate, a silanol oligomer, polyacrylonitrile, a phenolic resin, polyoxazol, cyclic polyisoprene, or the like. Of these, modified polyamide is preferred. As modified polyamide, for example, modified aromatic polyamide or modified aliphatic polyamide may be used. Of these, modified aliphatic polyamide is particularly preferred. Suitable examples thereof may include modified products of Nylon-6, Nylon-66, Nylon-12, terpolymer and tetrapolymer nylon, fatty acid-based polyamide, and fatty acid-based block copolymers (for example, polyether ester amide and polyester amide). Examples of modifications may include modifications such as terminal amino modification, carboxyl modification, and hydroxyl modification, and modifications such as alkylamination and N-alkoxyalkylation of part of amide groups. Examples of N-alkoxyalkylated polyamide may include copolymer nylons such as Nylon-6, Nylon-66, and Nylon-12, in which part of amide groups is N-methoxymethylated. The weight average molecular weight of modified polyamide is preferably 5,000 to 500,000 and more preferably 10,000 to 200,000.

The alignment film may be produced by, for example, applying a solution containing the aforementioned materials onto the substrate film, drying the solution, and performing a rubbing treatment. Examples of the application method used here may include a reverse gravure coating method, a direct gravure coating method, a die coating method, and a bar coating method.

The thickness of the alignment film is preferably 0.001 $\mu$m to 5 $\mu$m and more preferably 0.01 $\mu$m to 2 $\mu$m. When the substrate film has the alignment film, the layer of the cholesteric liquid crystal composition is usually provided on this alignment film.

Furthermore, before providing the layer of the cholesteric liquid crystal composition or before providing the alignment film, the surface of the substrate film may be subjected to surface treatments such as a corona discharge

treatment and a rubbing treatment, as necessary.

The cholesteric liquid crystal composition can be applied by a publicly known method, for example, an extrusion coating method, a direct gravure coating method, a reverse gravure coating method, a die coating method, or a bar coating method.

After the layer of the cholesteric liquid crystal composition is provided on the substrate film, an alignment treatment may be performed as necessary. The alignment treatment may be performed by, for example, heating the layer of the liquid crystal composition at 50°C to 150°C for 0.5 minutes to 10 minutes. The alignment treatment causes the cholesteric liquid crystal composition in the layer to be aligned well, and thus molecules of the liquid crystal compound exhibit cholesteric regularity.

Subsequently, a curing treatment is performed to cure the layer of the cholesteric liquid crystal composition. The curing treatment can be carried out by combining light irradiation and heating one or more times.

As heating conditions, the heating temperature is, for example, usually 40°C or higher and preferably 50°C or higher, and is usually 200°C or lower and preferably 140°C or lower, and the heating time is usually 1 second or longer and preferably 5 seconds or longer, and is usually 3 minutes or shorter and preferably 120 seconds or shorter.

The light used for light irradiation includes not only visible light but also ultraviolet rays and other electromagnetic waves. Light irradiation can be performed by, for example, irradiation with light having a wavelength of 200 nm to 500 nm for 0.01 seconds to 3 minutes. In this case, the energy of the light used for irradiation may be, for example, 0.01 $mJ/cm^2$ to 50 $mJ/cm^2$.

Alternate repetitions of weak ultraviolet irradiation at 0.01 $mJ/cm^2$ to 50 $mJ/cm^2$ and heating can provide a cholesteric resin layer having a helical structure in which the length of the pitch largely is changed continuously and having a wide reflection band and a function of separating circular polarized light. After the reflection band broadening by the weak ultraviolet irradiation or the like, further irradiation with relatively strong ultraviolet rays at 50 $mJ/cm^2$ to 10,000 $mJ/cm^2$ may be performed for complete polymerization of the liquid crystal compound, whereby a cholesteric resin layer having high mechanical strength can be obtained. Broadening of the reflection band and irradiation with the strong ultraviolet rays may be performed in the air. Alternatively, a part or all of these processes may be performed in an atmosphere in which the oxygen concentration is controlled (for example, in a nitrogen atmosphere).

The processes for applying and curing the cholesteric liquid crystal composition as described above may be performed once, or application and curing may be repeated plural times. Thereby the cholesteric resin layer including two or more layers can be formed. However, when the cholesteric liquid crystal composition (X) described in the aforementioned example is used, even by one implementation of applying and curing of the liquid crystal composition, a cholesteric resin layer containing a well aligned rod-shaped liquid crystal compound and having a thickness of 5 μm or larger can be formed easily.

When the cholesteric resin layer is produced by such a production method, the twisting direction of the cholesteric resin layer can be appropriately selected by the type (structure) of the chiral agent used. Specifically, a chiral agent that imparts dextrorotation is used to obtain right-handed twisting, and a chiral agent that imparts levorotation is used to obtain left-handed twisting.

The thickness of the cholesteric resin layer is preferably 0.1 μm or larger and more preferably 1 μm or larger for obtaining sufficient reflectance. The thickness of the cholesteric resin layer is preferably 20 μm or smaller and more preferably 10 μm or smaller for obtaining the transparency of the cholesteric resin layer. The thickness of the cholesteric resin layer refers to the total thickness of two or more layers in the cholesteric resin layer of the identification medium when the cholesteric resin layer includes two or more layers, and refers to the thickness of one layer in the cholesteric resin layer when the cholesteric resin layer is composed of one layer.

[Isotropic Layer]

The isotropic layer may be produced by, for example, curing the layer of the cholesteric liquid crystal composition described above. In this case, in order to obtain optical isotropy, the layer of the cholesteric liquid crystal composition is cured in a state where the cholesteric liquid crystal composition is not aligned. When a film like the CLC multilayer film 320 according to the second embodiment having the cholesteric resin layer 120 and the isotropic layer 310 formed on the substrate film 220 is produced by using this production method, for example, the film may be produced by the production method described below.

As in the method for forming the cholesteric resin layer described above, a layer of the cholesteric liquid crystal composition is provided on a substrate film after disposing an alignment film on the surface of the substrate film or performing a surface treatment as necessary. Subsequently, the layer of the cholesteric liquid crystal composition is subjected to an alignment treatment as necessary and then cured by using a predetermined mask. In this case, the alignment treatment and curing treatment may be performed in the same conditions as those described regarding the cholesteric resin layer. The mask is a member having a light transmissive part in the region corresponding to the pattern to be formed in the identification medium and having a light shielding part in the other region. When light irradiation is

performed through the mask in the curing treatment, the light passes through only the light transmissive part, and thus only the cholesteric liquid crystal composition in the region corresponding to the light transmissive part in an aligned state is cured. Therefore, a cholesteric resin layer having a shape corresponding to a desired pattern is formed.

Subsequently, the region in which the layer of the cholesteric liquid crystal composition is not cured is subjected to a treatment for changing its alignment into isotropy. For example, the film is heated at a temperature of 150°C to 200°C for 1 second to 5 seconds. As a result, the liquid crystal compound molecules in the cholesteric liquid crystal composition loses cholesteric regularity and become isotropic. In this state, the uncured region of the cholesteric liquid crystal composition that has lost cholesteric regularity is subjected to a treatment such as light irradiation at 50 $mJ/cm^2$ to 10,000 $mJ/cm^2$ to cure the layer. Accordingly, an isotropic layer is formed on the substrate film, and thus a single layer including the cholesteric resin layer 120 and the isotropic layer 310, like the mixed layer 330 according to the second embodiment, is obtained.

The thickness of the isotropic layer is usually the same as that of the cholesteric resin layer. However, if necessary, the thickness of the isotropic layer may be different from that of the cholesteric resin layer.

[Thermoplastic Resin Layer]

The thermoplastic resin layer is a layer made of a thermoplastic resin. The thermoplastic resin layer has characteristics of being softened by heating and solidified by cooling. By taking advantage of these characteristics, the metal foil and the cholesteric resin layer are bonded to each other by a welding method using a thermoplastic resin layer in the identification media according to the embodiments described above.

The thermoplastic resin usually contains a polymer and further contains optional components as necessary. As the polymer contained in the thermoplastic resin, a polymer that can impart high adhesiveness with the metal foil to the thermoplastic resin is preferred. Examples of the polymer may include an acrylic polymer, a urethane polymer, an ester polymer, an amide polymer, an amide-imide polymer, a cellulose polymer, a silicone polymer, and an acryl-silica hybrid polymer. Of these, an acrylic polymer, an ester polymer, an amide-imide polymer, and an acryl-silica hybrid polymer are preferred because these polymers have high heat resistance and transparency and achieve very good adhesiveness with the metal foil. One type thereof may be used alone, and two or more types thereof may also be used in combination at any ratio.

Examples of the acrylic polymer may include homopolymers and copolymers of monomers, for example, (meth)acrylic acid alkyl esters such as methyl (meth)acrylate, ethyl (meth)acrylate, propyl (meth)acrylate, butyl (meth)acrylate, hexyl (meth)acrylate, hexyl (meth)acrylate, octyl (meth)acrylate, nonyl (meth)acrylate, and decyl (meth)acrylate; unsaturated carboxylic acids such as (meth)acrylic acid, itaconic acid, crotonic acid, maleic acid, and fumaric acid; hydroxyl group-containing vinyl monomers such as 2-hydroxyethyl (meth)acylate, and a monoester of (meth)acrylic acid and polyethylene glycol or polypropylene glycol; epoxy group-containing vinyl monomers such as glycidyl (meth)acrylate; (meth)acrylic acid alkoxyalkyl esters such as methoxyethyl (meth)acrylate, ethoxyethyl (meth)acrylate, propoxyethyl (meth)acrylate, butoxyethyl (meth)acrylate, and ethoxypropyl (meth)acrylate; amide group-containing vinyl monomers such as (meth)acrylamide, methylol (meth)acrylamide, and methoxyethyl (meth)acrylamide; silicon-containing vinyl monomers such as methacryloxypropylmethoxysilane; aziridine group-containing vinyl monomers such as (meth)acryloyl aziridine; aromatic group-containing vinyl monomers such as phenyl (meth) acrylate, benzyl (meth)acrylate, styrene, and methylstyrene; esters of alicyclic alcohols and (meth)acrylates such as cyclohexyl (meth)acrylate and isobornyl (meth)acrylate; monomers having two or more (meth)acryloyl groups such as ethylene glycol di(meth)acrylate, trimethylolpropane tri(meth)acrylate, pentaerythritol tri(meth)acrylate, pentaerythritol tetra(meth)acrylate, and dipentaerythritol hexa(meth)acrylate; vinyl acetate; vinyl chloride; macromonomers; and divinylbenzene.

Examples of the urethane polymer may include reaction products between ordinary polyols and isocyanate compounds.

Examples of polyols may include polyether polyols having one or more structural units of alkylene oxide chains such as a methylene oxide chain, an ethyle oxide chain, an ethylene oxide chain, a propylene oxide chain, and a butylene oxide chain; polyester polyols obtained by an esterification reaction between acid compounds such as terephthalic acid, adipic acid, adipic acid, sebacic acid, phthalic anhydride, isophthalic acid, and trimellitic acid, and glycol components such as ethylene glycol, propylene glycol, diethylene glycol, butylene glycol, 1,6-hexaneglycol, 3-methyl-1,5-pentanediol, 3,3'-dimethylolheptane, polyoxyethylene glycol, polyoxypropylene glycol, 1,4-butanediol, neopentyl glycol, and butylethylpentanediol; polyester polyols obtained by a reaction between the aforementioned acid compounds and polyols such as glycerol, trimethylolpropane, and pentaerythritol; and polyester polyols obtained by ring opening polymerization of lactones such as polycaprolactone, poly(β-methyl-γ-valerolactone), and polyvalerolactone.

Examples of isocyanate compounds may include aromatic polyisocyanates such as 1,3-phenylene diisocyanate, 4,4'-diphenyl diisocyanate, 1,4-phenylene diisocyanate, 4,4'-diphenylenemethane diisocyanate, 2,4-tolylene diisocyanate, 2,6-tolylene diisocyanate, 4,4'-toluidine diisocyanate, and 4,4'-diphenylether diisocyanate; aliphatic polyisocyanates such as trimethylene diisocyanate, tetramethylene diisocyanate, hexamethylene diisocyanate, pentamethylene

diisocyanate, 2,3-butylene diisocyanate, 1,3-butylene diisocyanate, dodecanemethylene diisocyanate, and 2,4,4-trimethyl hexamethylene diisocyanate; aromatic aliphatic polyisocyanates such as ω,ω'-diisocyanate-1,3-dimethylbenzene, ω,ω'-diisocyanate-1,4-dimethylbenzene, ω,ω'-diisocyanate-1,3-diethylbenzene, 1,4-tetramethylxylylene diisocyanate, and 1,3-tetramethylxylylene diisocyanate; and alicyclic polyisocyanates such as 3-isocyanatemethyl-3,5,5-trimethylcyclohexyl isocyanate, 1,3-cyclohexane diisocyanate, 1,4-cyclohexane diisocyanate methyl-2,4-cyclohexane diisocyanate, methyl-2,6-cyclohexane diisocyanate, 4,4'-methylene bis(cyclohexylisocyanate), and 1,4'-bis(isocyanatemethyl) cyclohexane.

Examples of the ester polymer may include an aliphatic polyester described in Japanese Patent Application Laid-Open No. Hei. 10-86307 A.

Examples of the amide polymer may include N-alkoxyalkylated polyamide described in Japanese Patent Application Laid-Open No. 2011-36765 A.

Examples of the amide-imide polymer may include a polyimide precursor described in WO 2013/136807.

Examples of the cellulose polymer may include cellulose derivatives described in Japanese Patent Application Laid-Open No. 2011-195697 A.

Examples of the silicone polymer may include a polymer of silicone or a silicone precursor described in Japanese Patent No. 2756474 B.

Examples of the acryl-silica hybrid polymer may include an organic-inorganic hybrid material described in WO 2012/133741.

The glass transition temperature Tg of the thermoplastic resin contained in the thermoplastic resin layer is preferably 80°C or higher, more preferably 90°C or higher, and particularly preferably 100°C or higher, and is preferably 200°C or lower, more preferably 170°C or lower, and particularly preferably 150°C or lower. When the glass transition temperature Tg of the thermoplastic resin is equal to or higher than the lower limit of the aforementioned range, the thermoplastic resin is solidified at the time of use of the identification medium, and thus the bonding strength between the metal foil and the cholesteric resin layer can be increased. The durability of the identification medium in the environment of usage can also be maintained. When the glass transition temperature Tg is equal to or lower than the upper limit, the thermoplastic resin layer can be smoothly melted at the time of welding, and thus the identification medium can be produced easily.

Examples of optional components that may be contained in the thermoplastic resin may include a silane coupling agent. Examples of the silane coupling agent may include vinyl group-containing silane coupling agents such as vinyltrimethoxysilane and vinyltriethoxysilane; epoxy group-containing silane coupling agents such as 2-(3,4-epoxycyclohexyl)ethyltrimethoxysilane, 3-glycidoxypropylmethyldimetoxysilane, 3-glycidoxypropyltrimetoxysilane, 3-glycidoxypropylmethyldiethoxysilane, and 3-glycidoxypropyltriethoxysilane; styryl group-containing silane coupling agents such as p-styryl trimethoxysilane; methacrylic group-containing silane coupling agents such as 3-methacryloxypropylmethyldimethoxysilane, 3-methacryloxypropyltrimethoxysilane, 3-methacryloxypropylmethyldiethoxysilane, and 3-methacryloxypropyltriethoxysilane; acrylic group-containing silane coupling agents such as 3-acryloxypropyltrimethoxysilane; amino group-containing silane coupling agents such as N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, and N-(vinylbenzyl)-2-aminoethyl-3-aminopropyltrimethoxysilane hydrochloride; isocyanurate group-containing silane coupling agents such as tris-(trimethoxysilylpropyl)isocyanurate; ureido group-containing silane coupling agents such as 3-ureidopropyltrialkoxysilane; mercapto group-containing silane coupling agents such as 3-mercaptopropylmethyldimethoxysilane and 3-mercaptopropyltrimethoxysilane; sulfide group-containing silane coupling agents such as bis(triethoxysilylpropyl)tetrasulfide; and isocyanate group-containing silane coupling agents such as 3-isocyanatepropyltriethoxysilane. The amount of these silane coupling agents can be set in the range in which a desired optical performance is not degraded.

The thermoplastic resin layer preferably has optical isotropy for stably exhibiting a function of identifying the authenticity of the identification medium. Specifically, the front retardation Re of the thermoplastic resin layer at a wavelength Of 550 nm is preferably 0 nm or higher and 10 nm or lower.

Furthermore, the thermoplastic resin layer is preferably transparent. Specifically, the total light transmittance of the thermoplastic resin layer is preferably 85% or more, more preferably 90% or more, and particularly preferably 95% or more. Because of this total light transmittance, a region with the cholesteric resin layer and a region without the cholesteric resin layer are observed as regions having similar colors when the surface of the identification medium on the cholesteric resin layer side is viewed without using a circularly polarizing plate. This can make it difficult to recognize a pattern formed of the cholesteric resin layer.

The thickness of the thermoplastic resin layer is preferably 0.5 μm or larger, more preferably 1 μm or larger, and particularly preferably 2 μm or larger, and is preferably 5 μm or smaller, more preferably 4 μm or smaller, and particularly preferably 3 μm or smaller. When the thickness of the thermoplastic resin layer is equal to or larger than the lower limit of the aforementioned range, the adhesive strength between the metal foil and the cholesteric resin layer can be maintained high. When the thickness of the thermoplastic resin layer is equal to or smaller than the upper limit, a

difference in level between a region with the cholesteric resin layer and a region without the cholesteric resin layer can be reduced in a case of viewing the surface of the identification medium on the cholesteric resin layer side without using a circularly polarizing plate. Therefore, the observer cannot easily recognize the pattern formed of the cholesteric resin layer, and thus a forgery difficulty can be further increased.

[Other Components]

The identification medium may include components other than the metal foil, the cholesteric resin layer, and the thermoplastic resin layer described above.

For example, the identification medium may include the substrate film and the alignment film that are used for producing the cholesteric resin layer.

For example, the identification medium may include a support film layer, a protective layer, an adhesion facilitating layer, a lubricating layer, a hard coat layer, an antistatic layer, a wear-resistant layer, an antireflection layer, a color compensating layer, an ultraviolet ray absorbing layer, a printed layer, a transparent conductive layer, a gas barrier layer, a hologram layer, a release layer, an adhesive layer, and an embossed layer.

[Application]

The identification medium of the present invention may be applied to any article that requires identification of authenticity. Examples of applications may include containers for pharmaceuticals, cosmetics, perfumes, toners, and the like; opening seals; packages; paper money; securities; gift certificates; passports; electronics; bags; clothing; cloths; credit cards; security cards; articles having information with patterned codes (for example, one-dimensional codes such as bar codes, and two-dimensional codes such as QR Code (registered trademark)); and identification media for forgery prevention to be applied to various certifications and the like.

[EXAMPLES]

The present invention will be described below in detail by way of Examples. It should be noted that the present invention is not limited to Examples described below and may be freely modified and practiced without departing from the scope of the claims of the present invention and the scope of their equivalents.

In the following description, "%" and "part" that represent an amount are based on weight unless otherwise specified. The procedures described below were carried out in the air at normal temperature and normal pressure unless otherwise specified.

[Evaluation Method]

[Measurement Direction for Chromaticity Coordinates and Reflectance]

The chromaticity coordinates and the reflectance at a wavelength 550 nm were determined in accordance with JIS Z8722 using a spectrophotometer ("V-7200" available from JASCO Corporation) by causing light to enter the surface of the object to be measured in a direction at an angle of 5° with respect to the normal direction of the surface of the object to be measured, and measuring the chromaticity coordinates and the reflectance in a direction that was inclined at an angle of 5° with respect to the normal direction and was symmetric to the direction of the incident light about the normal direction. In this measurement, s-polarized light and p-polarized light were used as incident light, and the average value of numerical values determined with these types of light were employed as the chromaticity coordinates and the reflectance of the object to be measured. Illuminant C was used as a light source.

[Method for Evaluating Recognizability of Pattern without Viewer]

The identification medium was visually observed, and the recognizability of the pattern without a viewer was evaluated in accordance with the following criteria.
Possible: the pattern can be recognized.
Impossible: the pattern cannot be recognized.

[Method for Evaluating Recognizability of Pattern with Viewer]

A viewer composed of a circularly polarizing plate including a linear polarizer and a quarter-wave plate was prepared. This viewer was placed on the identification medium such that the linear polarizer faces the observer, and the

identification medium was observed. From the observation results, the recognizability of the pattern with a viewer was evaluated in accordance with the following criteria.
Possible: the pattern can be recognized.
Impossible: the pattern cannot be recognized.

[Method for Evaluating Adhesiveness]

An X-shaped incision was created with a razor blade in a region of the identification medium in which the cholesteric resin layer was formed. A cellophane adhesive tape having a width of 12 mm in accordance with JIS Z1522 was stuck so as to cover the incised portion. Immediately afterwards, one end of the cellophane adhesive tape was pulled vertically with respect to the surface of the identification medium for accomplishing instantaneous removal. The incised portion was observed for evaluating the adhesiveness in accordance with the following criteria.
Good: No separation of the cholesteric resin layer from the metal foil was observed.
Poor: The separation of the cholesteric resin layer from the metal foil was observed in regions including the vicinity of the X-shaped incision.

[Method for Evaluating Clearness of Pattern]

The amount of deviation of the width of the pattern actually formed of the cholesteric resin layer from the designed width of the pattern was determined. From this amount of deviation, the clearness of the pattern was evaluated in accordance with the following criteria.
Good: The amount of deviation of the width of the pattern was in the range of ±3 mm in the entire pattern.
Poor: There is some region in which the amount of deviation of the width of the pattern was out of the range of ±3 mm.

[Example 1]

(1-1. Production of CLC Multilayer Film)

A cholesteric liquid crystal composition was prepared by mixing 25.5 parts of the compound represented by the formula (X) described below, 11 parts of a polymerizable liquid crystal compound represented by the formula (Y) described below, 2.3 parts of a chiral agent ("LC 756" available from BASF SE), 1.2 parts of a polymerization initiator ("Irgacure OXE02" available from Ciba Specialty Chemicals, Inc.), 0.04 parts of a surfactant ("FTERGENT 209F" available from NEOS COMPANY LIMITED), and 60 parts of cyclopentanone as a solvent.

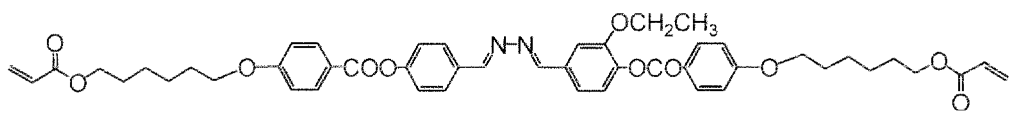

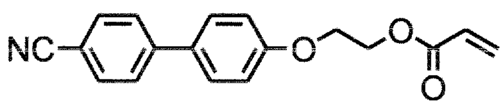

The compound represented by the formula (X) described above and the compound represented by the formula (Y) described above were ones produced in accordance with the methods described in Japanese Patent No. 5365519 B and Japanese Patent No. 4054392 B, respectively.
A polyethylene terephthalate film ("COSMOSHINE A4100" available from Toyobo Co., Ltd., thickness; 100 μm) was subjected to a rubbing treatment. The film has an adhesion facilitating layer only one of the surfaces, and the rubbing treatment was performed on the surface not having the adhesion facilitating layer. The rubbed surface was coated with the cholesteric liquid crystal composition by using a wire bar #10 to obtain a layer of the cholesteric liquid crystal composition. This layer was subjected to an alignment treatment at 130°C for 5 minutes. Subsequently, the layer of the cholesteric liquid crystal composition was subjected a process including weak ultraviolet irradiation at 0.1 mJ/cm$^2$ to 45 mJ/cm$^2$ and subsequent heating at 100°C for one minute. The process was repeated twice. Then irradiation with ultraviolet rays at 800 mJ/cm$^2$ in a nitrogen atmosphere was performed to form a cholesteric resin layer having a thickness of 5.2 μm. This provided a CLC multilayer film having a layer structure of cholesteric resin layer/polyethylene terephthalate film.

(1-2. Formation of Thermoplastic Resin Layer)

To 3.06 parts of a polyester-based resin solution ("VYLON UR-4800" available from Toyobo Co., Ltd.), 0.019 parts of polyfunctional isocyanate ("TPA-100" available from Asahi-Kasei Chemicals Corporation) was added. Then 6.9 parts of methyl ethyl ketone was further added, and the mixture was stirred, for producing a coating liquid for forming a thermoplastic resin layer.

A stainless steel foil (SUS 302, thickness; 0.05 mm) was prepared as a metal foil. The coating liquid was applied onto this metal foil by using a #22 bar and dried at 80°C for 5 minutes to obtain a thermoplastic resin layer having a thickness of 2.4 μm. This provided a layered support having the metal foil and the thermoplastic resin layer.

(1-3. Formation of Cholesteric Resin Layer)

The CLC multilayer film was disposed on the thermoplastic resin layer of the layered support such that the thermoplastic resin layer faces the cholesteric resin layer. At this time, the thermoplastic resin layer and the cholesteric resin layer was brought into contact with each other. This provided a layered intermediate including, in this order, the metal foil, the thermoplastic resin layer, the cholesteric resin layer, and the polyethylene terephthalate film.

The layered intermediate was placed in a transverse vibration welder (transverse vibration welder 2000Xdt and stand 20SA available from Emerson Japan, Ltd.). A horn having a plurality of protrusions with a height of 0.5 mm was attached to the booster of the welder. This horn was brought into contact with the surface of the layered intermediate on the polyethylene terephthalate film side. The horn was vibrated for performing the ultrasonic welding process. The conditions for this welding process were as described below.
Oscillation frequency: 40 Hz
Oscillation time: 0.250 sec
Actual pressure: 100 kPa
Cooling time: 0.200 sec

The ultrasonic welding process was repeated by moving the horn along the pattern to be formed. In the region subjected to the welding process, the cholesteric resin layer was bonded to the metal foil via the thermoplastic resin layer.

Subsequently, the CLC multilayer film was separated from the layered support by pulling the polyethylene terephthalate film. The cholesteric resin layer was separated from the thermoplastic resin layer in the region other than the region subjected to the welding process. However, the cholesteric resin layer remained on the thermoplastic resin layer in the region subjected to the welding process. This provided an identification medium having the cholesteric resin layer in a region with a desired pattern on the metal foil.

This identification medium was evaluated by the aforementioned method.

[Example 2]

In the above-described step (1-2), an iridium foil (thickness; 0.05 mm) was used as a metal foil in place of the stainless steel foil.

An identification medium was produced and evaluated in the same manner as in Example 1 except for the matter described above.

[Example 3]

In the above-described step (1-3), the number of patterns was increased.

An identification medium was produced and evaluated in the same manner as in Example 1 except for the matter described above.

[Example 4]

In the above-described step (1-1), the thickness of the cholesteric resin layer was reduced by changing the coating amount of the cholesteric liquid crystal composition.

An identification medium was produced and evaluated in the same manner as in Example 1 except for the matter described above.

[Example 5]

In the above-described step (1-1), the thickness of the cholesteric resin layer was increased by changing the coating amount of the cholesteric liquid crystal composition.

An identification medium was produced and evaluated in the same manner as in Example 1 except for the matter described above.

[Example 6]

In the above-described step (1-1), the thickness of the cholesteric resin layer was increased by changing the coating amount of the cholesteric liquid crystal composition.
An identification medium was produced and evaluated in the same manner as in Example 1 except for the matter described above.

[Example 7]

In the above-described step (1-1), ultraviolet irradiation was performed through a mask having a light transmissive part corresponding to the pattern to be formed during the process including weak ultraviolet irradiation and subsequent heating. Furthermore, before ultraviolet irradiation at 800 mJ/cm$^2$ after the process described above, heating at a temperature of 170°C for 30 seconds was performed to change the uncured region of the cholesteric liquid crystal composition into an isotropic region. While this isotropic state was maintained, a curing treatment was performed by ultraviolet irradiation.
Furthermore, in the above-described step (1-3), a welding process was performed not only on the region corresponding to the pattern to be formed but also on the entire surface of the metal foil.
An identification medium was produced and evaluated in the same manner as in Example 1 except for the matters described above.

[Example 8]

In the above-described step (1-3), a metal foil itself was used in place of the layered support including the metal foil and the thermoplastic resin layer.
An identification medium was produced and evaluated in the same manner as in Example 1 except for the matter described above.

[Example 9]

In the above-described step (1-3), a thermal welding process described below was performed in place of the ultrasonic welding process using the transverse vibration welder.
An identification medium was produced and evaluated in the same manner as in Example 1 except for the matter described above.

(Thermal Welding Process)

A heater part of a heat welder (available from Seidensha Electronics Co. Ltd.) was brought into contact with the surface of the layered intermediate on the polyethylene terephthalate film side. Then heat was applied thereon from the heater part, to thereby perform the thermal welding process. The thermal welding process was repeated by moving the heater part along the pattern to be formed. In the region subjected to the welding process, the cholesteric resin layer was thereby bonded to the metal foil via the thermoplastic resin layer.

[Comparative Example 1]

In the above-described step (1-3), the cholesteric resin layer was bonded to the entire surface of the metal foil by performing the welding process not only over a predetermined pattern portion but also over the entire surface of the metal foil.
An identification medium was produced and evaluated in the same manner as in Example 1 except for the matter described above.

[Comparative Example 2]

In the above-described step (1-1), the thickness of the cholesteric resin layer was reduced by changing the coating amount of the cholesteric liquid crystal composition.
An identification medium was produced and evaluated in the same manner as in Example 1 except for the

matter described above.

[Results]

The results of Examples and Comparative Examples are described in the following tables. The abbreviations in the following tables have the meanings as described below.
Percentage of pattern: Percentage of area of cholesteric resin layer in surface area of metal foil.
CLC thickness: Thickness of cholesteric resin layer
PEs: Polyester
USW: Ultrasonic welding
TW: Thermal welding

[Table 3: Results of Examples 1-6]

| | Example 1 | Example 2 | Example 3 | Example 4 | Example 5 | Example 6 |
|---|---|---|---|---|---|---|
| Metal foil | SUS302 | Iridium | SUS302 | SUS302 | SUS302 | SUS302 |
| Percentage of pattern (%) | 10 | 10 | 30 | 10 | 10 | 10 |
| The number of patterns | 3 | 3 | 10 | 3 | 3 | 3 |
| CLC thickness ($\mu$m) | 5.2 | 5.2 | 5.2 | 3.2 | 9.0 | 15.0 |
| Isotropic layer | Absent | Absent | Absent | Absent | Absent | Absent |
| \|x1-x2\| | 0.0011 | 0.0001 | 0.0011 | 0.0180 | 0.0010 | 0.0014 |
| \|y1-y2\| | 0.0091 | 0.0099 | 0.0091 | 0.0150 | 0.0120 | 0.0110 |
| \|Ya550-Yb550\| | 5.61 | 9.28 | 5.61 | 7.65 | 4.51 | 4.28 |
| Thermoplastic resin | PEs | Pes | PEs | Pes | PEs | Pes |
| Welding method | USM | USW | USW | USW | USW | USW |
| Recognizability (without viewer) | Impossible | Impossible | Impossible | Impossible | Impossible | Impossible |
| Recognizability (with viewer) | Possible | Possible | Possible | Possible | Possible | Possible |
| Adhesiveness | Good | Good | Good | Good | Good | Good |
| Clearness of Pattern | Good | Good | Good | Good | Good | Poor |

[Table 4: Results of Examples 7-9, Comparative Examples 1 and 2]

| | Example 7 | Example 8 | Example 9 | Comparative Example 1 | Comparative Example 2 |
|---|---|---|---|---|---|
| Metal foil | SUS302 | SUS302 | SUS302 | SUS302 | SUS302 |
| Percentage of pattern (%) | 10 | 10 | 10 | 100 | 10 |
| The number of patterns | 3 | 3 | 3 | - | 3 |
| CLC thickness ($\mu$m) | 5.2 | 5.2 | 5.2 | 5.2 | 1.0 |
| Isotropic layer | Present | Absent | Absent | Absent | Absent |
| \|x1-x2\| | 0.0011 | 0.0011 | 0.0011 | 0.0011 | 0.0315 |
| \|y1-y2\| | 0.0091 | 0.0091 | 0.0091 | 0.0091 | 0.0250 |
| \|Ya550-Yb550\| | 5.61 | 5.61 | 5.61 | 5.61 | 8.32 |
| Thermoplastic resin | PEs | Absent | Pes | Pes | PEs |
| Welding method | USW | USW | TW | USW | USW |

(continued)

| | Example 7 | Example 8 | Example 9 | Comparative Example 1 | Comparative Example 2 |
|---|---|---|---|---|---|
| Recognizability (without viewer) | Impossible | Impossible | Impossible | Impossible | Possible |
| Recognizability (with viewer) | Possible | Possible | Possible | Impossible | Possible |
| Adhesiveness | Good | Poor | Good | Good | Poor |
| Clearness of Pattern | Good | Good | Poor | - | Good |

From the results of Examples and Comparative Examples described above, it was confirmed that the pattern in the identification medium of the present invention can be recognized by using a circularly polarizing plate and cannot be easily recognized by visual observation without using a circularly polarizing plate. In particular, from the comparison between Example 9 in which the identification medium is produced by the thermal welding method and Examples 1 to 8 in which the identification medium is produced by the ultrasonic welding method, it was confirmed that an intended pattern can be accurately drawn with the cholesteric resin layer by the ultrasonic welding method. This is probably because of the following reason: heat diffuses during the transmission of heat through the substrate film and the cholesteric resin layer in the thermal welding method, which makes it difficult to obtain an intended shape of the welded part, whereas such diffusion of heat does not occur in the ultrasonic fusing method, which allows accurate drawing of a pattern with an intended shape.

Reference Signs List

| | |
|---|---|
| 100 | identification medium |
| 100U | surface of identification medium |
| 110 | metal foil |
| 110U | surface of metal foil |
| 120 | cholesteric resin layer |
| 120U | surface of cholesteric resin layer |
| 131-133 | patterns |
| 140 | thermoplastic resin layer |
| 150 | right-handed circularly polarizing plate |
| 160 | left-handed circularly polarizing plate |
| 210 | layered support |
| 220 | substrate film |
| 230 | CLC multilayer film |
| 240 | layered intermediate |
| 250 | horn of ultrasonic welding machine |
| 251 | protrusions formed on horn |
| 300 | identification medium |
| 310 | isotropic layer |
| 320 | CLC multilayer film |
| 330 | mixed layer |
| 340 | layered intermediate |

**Claims**

1. An identification medium comprising a metal foil and a cholesteric resin layer fragmentally disposed on the metal foil, wherein chromaticity coordinates (x1, y1) in an xy chromaticity diagram of the metal foil and chromaticity coordinates (x2, y2) in an xy chromaticity diagram of the cholesteric resin layer satisfy:

$$0 \leq |x1 - x2| \leq 0.02$$

and

$$0 \leq |y1 - y2| \leq 0.02.$$

**2.** The identification medium according to claim 1, wherein a distance between a surface of the metal foil on a side of the cholesteric resin layer and a surface of the cholesteric resin layer on a side opposite to the metal foil is 3 μm or larger and 10 μm or smaller.

**3.** The identification medium according to claim 1 or 2, further comprising an isotropic layer,
wherein the cholesteric resin layer and the isotropic layer exist in a mixed manner in a single layer.

**4.** The identification medium according to any one of claims 1 to 3,
wherein a reflectance Ya550 of the metal foil at a wavelength of 550 nm and a reflectance Yb550 of the cholesteric resin layer at a wavelength of 550 nm satisfy:

$$0\% \leq |Ya550 - Yb550| \leq 10\%.$$

**5.** The identification medium according to any one of claims 1 to 4, further comprising a thermoplastic resin layer between the metal foil and the cholesteric resin layer.

**6.** A method for producing the identification medium according to claim 5, comprising:

a step of disposing the thermoplastic resin layer on the metal foil;
a step of bringing the thermoplastic resin layer into contact with the cholesteric resin layer; and
a step of welding the thermoplastic resin layer and the cholesteric resin layer together.

**7.** A method of using the identification medium according to any one of claims 1 to 5, comprising:

viewing a surface of the identification medium on a side of the cholesteric resin layer through a circularly polarizing plate, whereby a region with the cholesteric resin layer is observed as bright state, and a region without the cholesteric resin layer is observed as dark state.

FIG.1

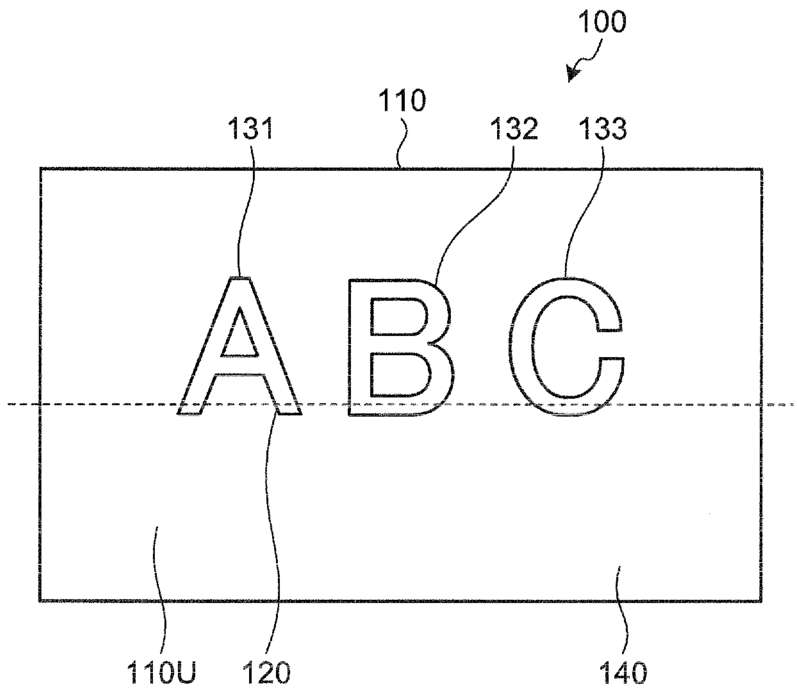
100
110
131
132
133
110U
120
140

FIG.2

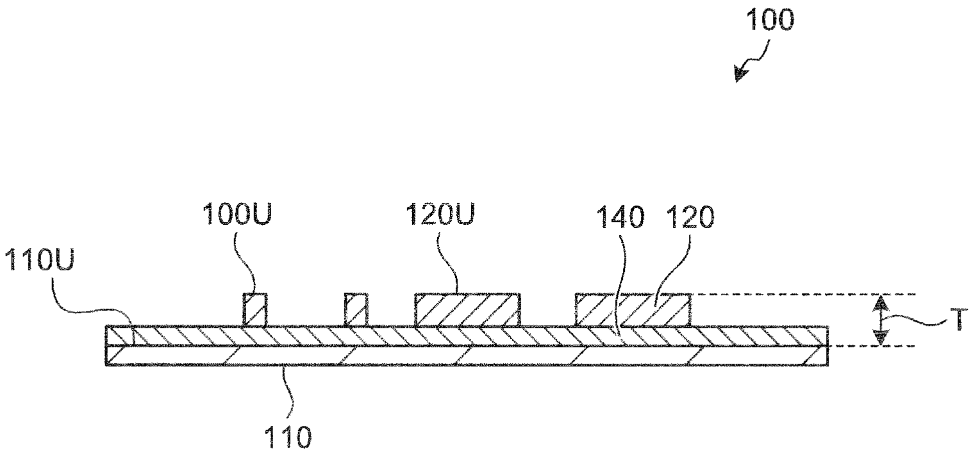
100
100U
120U
140
120
110U
T
110

FIG.3

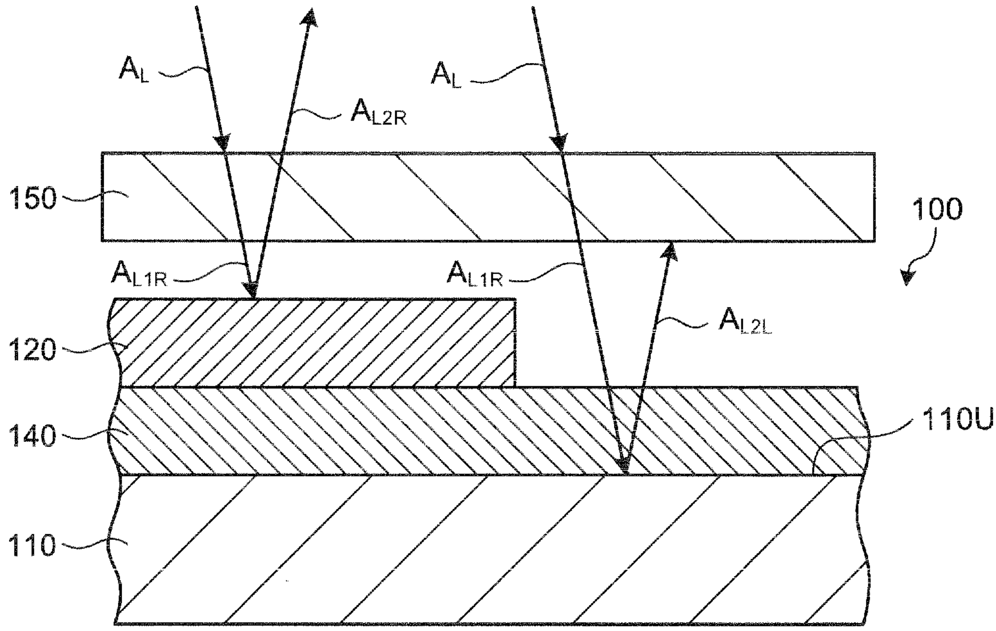
A_L
A_L2R
A_L
150
100
A_L1R
A_L1R
A_L2L
120
140
110U
110

FIG.4

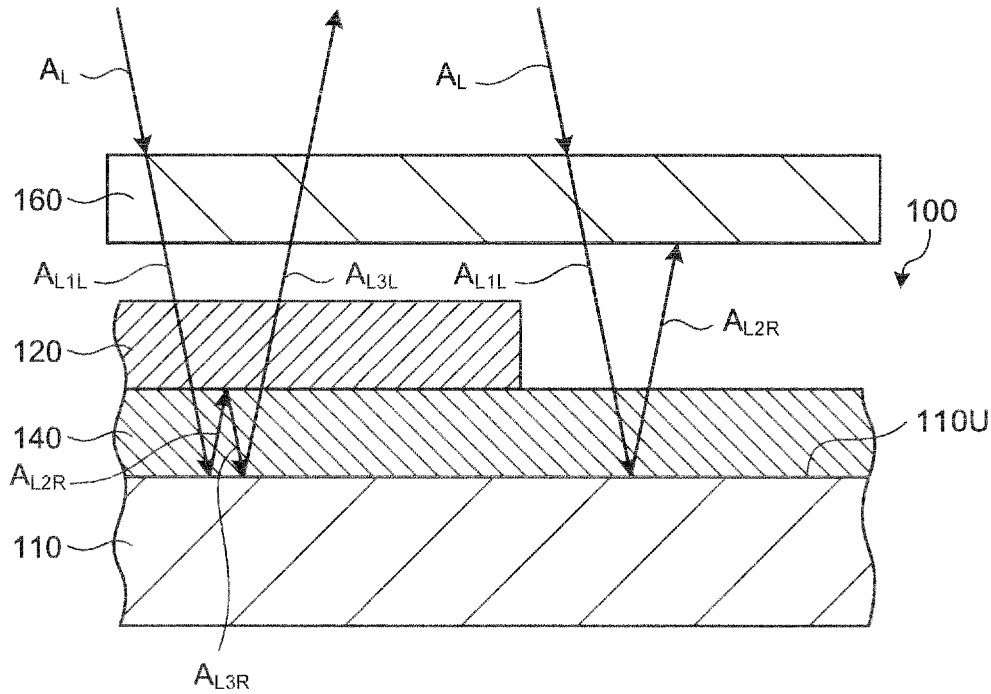
A_L
A_L
160
100
A_L1L
A_L3L
A_L1L
A_L2R
120
140
110U
A_L2R
110
A_L3R

FIG.5

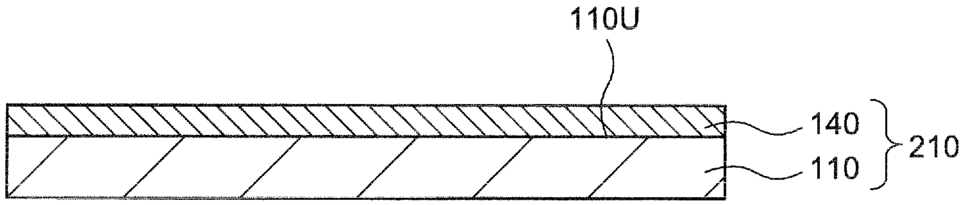


FIG.6

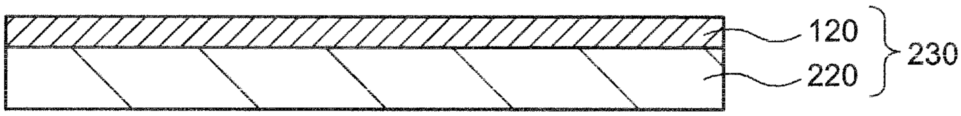

FIG.7

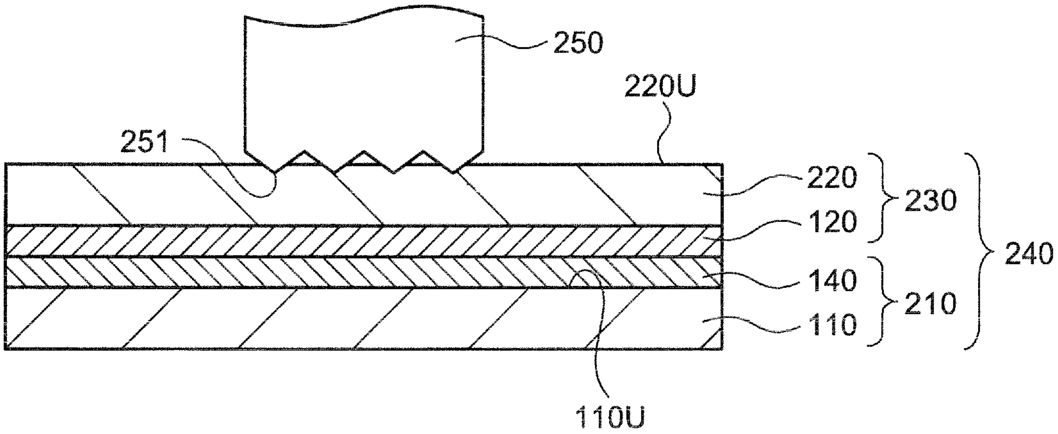
250
220U
251
220
230
120
240
140
210
110
110U

FIG.8

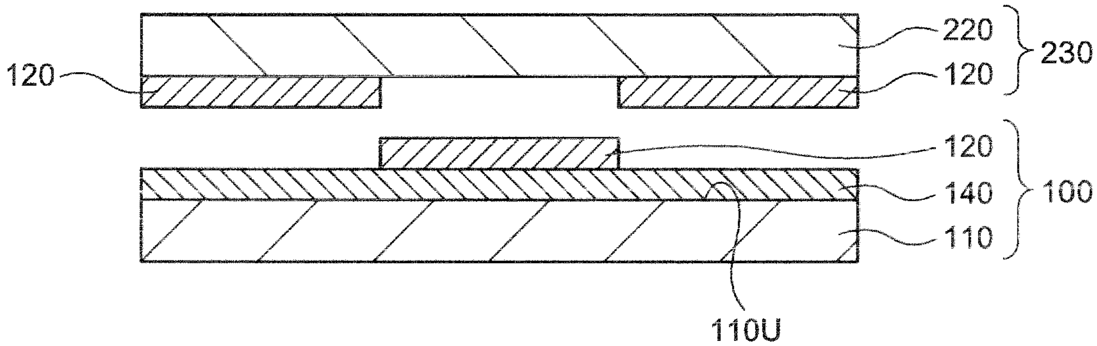
220
230
120
120
120
140
100
110
110U

FIG.9

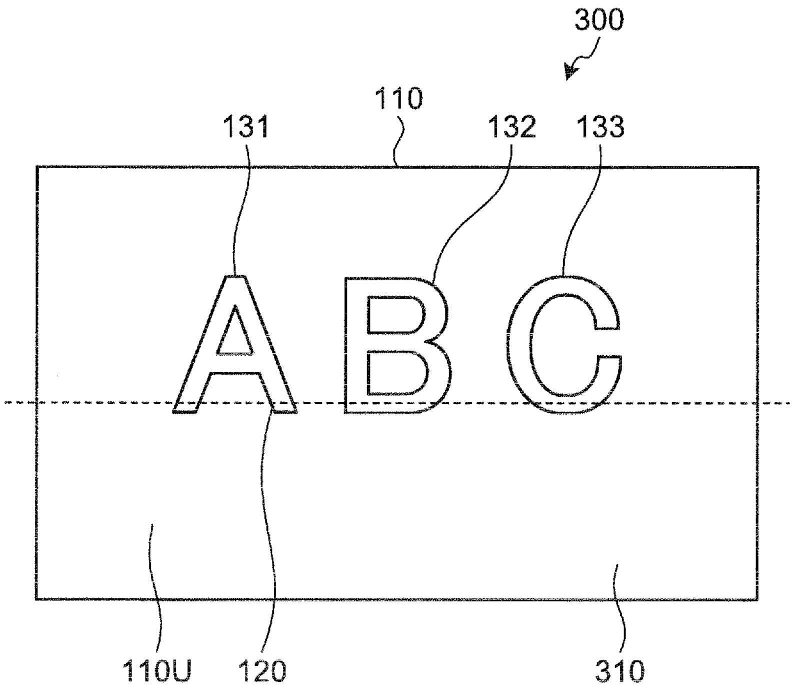
300
110
131
132
133
ABC
110U
120
310

FIG.10

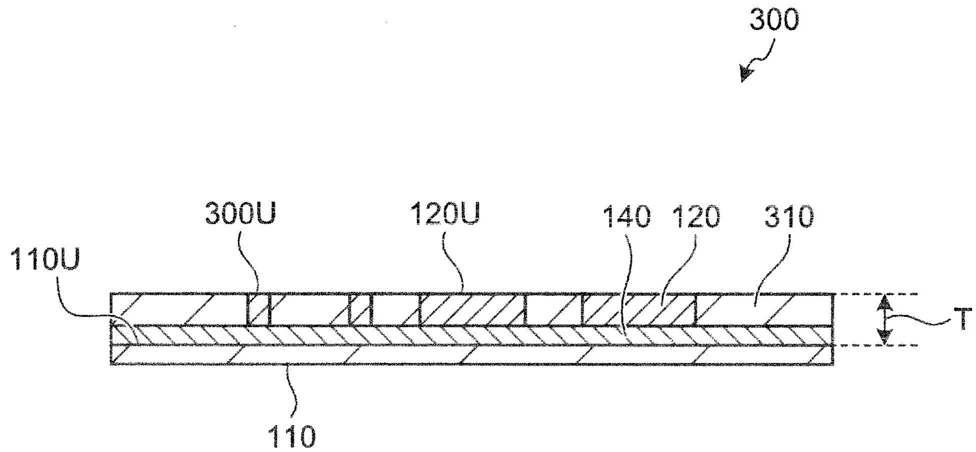
300
300U
120U
140
120
310
110U
T
110

FIG.11

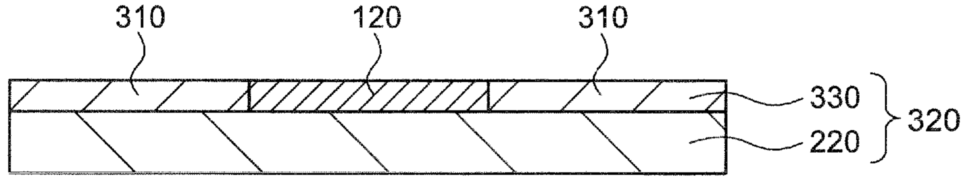
310
120
310
330
320
220

FIG.12

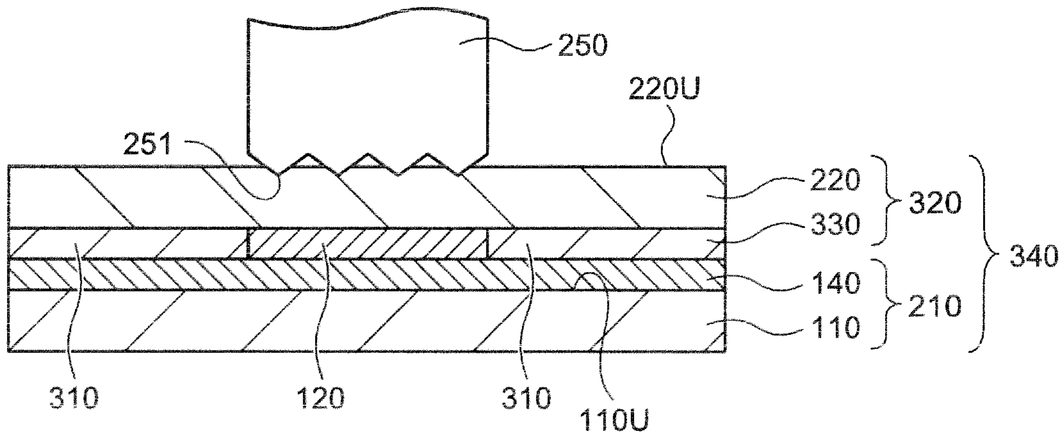
250
220U
251
220
320
330
340
140
210
110
310
120
310
110U

FIG.13

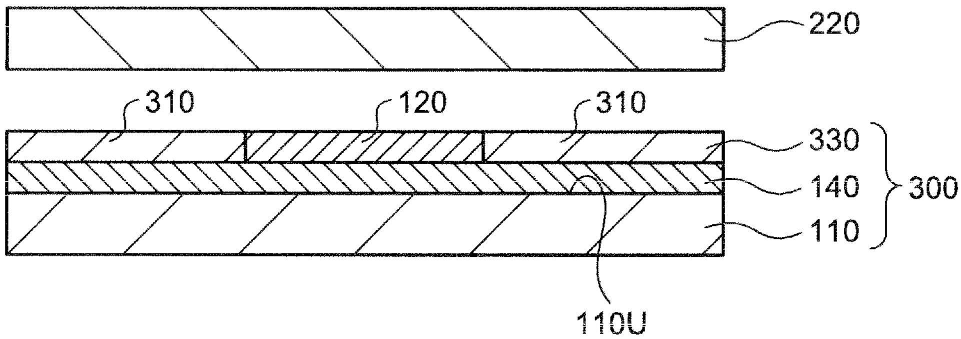

## INTERNATIONAL SEARCH REPORT

International application No.
PCT/JP2015/068801

A. CLASSIFICATION OF SUBJECT MATTER
*G02B5/30*(2006.01)i, *B32B15/08*(2006.01)i, *B41M3/14*(2006.01)i, *B42D25/364* (2014.01)i

According to International Patent Classification (IPC) or to both national classification and IPC

B. FIELDS SEARCHED

Minimum documentation searched (classification system followed by classification symbols)
G02B5/30, B32B15/08, B41M3/14, B42D25/364

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-018178 A (National Printing Bureau), 31 January 2013 (31.01.2013), paragraphs [0072] to [0073], [0084] to [0085]; fig. 14, 25 (Family: none) | 1,4,7<br>2-3,5-6 |
| Y | JP 2011-022314 A (Toppan Printing Co., Ltd.), 03 February 2011 (03.02.2011), paragraphs [0030] to [0036], [0041], [0053] to [0054]; fig. 6 (Family: none) | 2-3,5-6 |
| Y | JP 2011-128416 A (Toppan Printing Co., Ltd.), 30 June 2011 (30.06.2011), paragraphs [0020] to [0022], [0028] to [0029]; fig. 1 (Family: none) | 2,5-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
15 September 2015 (15.09.15)

Date of mailing of the international search report
29 September 2015 (29.09.15)

Name and mailing address of the ISA/
Japan Patent Office
3-4-3,Kasumigaseki,Chiyoda-ku,
Tokyo 100-8915,Japan

Authorized officer

Telephone No.

Form PCT/ISA/210 (second sheet) (July 2009)

**INTERNATIONAL SEARCH REPORT**

International application No.
PCT/JP2015/068801

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2003-131187 A (Fuji Photo Film Co., Ltd.), 08 May 2003 (08.05.2003), paragraphs [0040] to [0042]; fig. 2 (Family: none) | 5-6 |
| Y | JP 2008-256926 A (Toppan Printing Co., Ltd.), 23 October 2008 (23.10.2008), paragraph [0139]; fig. 2 & US 2008/0239216 A1 & WO 2008/041580 A1 & EP 2068208 A1 & CA 2631161 A & KR 10-2009-0071511 A & AU 2007303379 A | 5-6 |
| Y | JP 2008-129421 A (NHK Spring Co., Ltd.), 05 June 2008 (05.06.2008), paragraphs [0059], [0093]; fig. 7 & US 2010/0026450 A1 & WO 2008/062620 A1 & EP 2085799 A1 & CN 101542331 A & KR 10-2009-0096437 A | 5-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2285587 A
- JP 5123445 B
- EP 1129373 A
- JP 2005289881 A
- JP 2004115414 A
- JP 2003066214 A
- JP 2003313187 A
- JP 2003342219 A
- JP 2000290315 A
- JP 6072962 A
- US 6468444 B
- WO 9800428 A
- JP 2007176870 A
- JP HEI1086307 A
- JP 2011036765 A
- WO 2013136807 A
- JP 2011195697 A
- JP 2756474 B
- WO 2012133741 A
- JP 5365519 B
- JP 4054392 B